# EUROPÄISCHE PATENTSCHRIFT

(11) **EP 2 724 071 B1**
(45) Veröffentlichungstag und Bekanntmachung des Hinweises auf die Patenterteilung: **11.10.2017**
(21) Anmeldenummer: 12715045.6
(22) Anmeldetag: 05.04.2012
(51) Int. Cl.: F16P 1/02, B23Q 11/08, F16F 1/02, F16J 3/04

(54) **LAMELLENABDECKUNG UND FEDERELEMENT FÜR EINE LAMELLENABDECKUNG**
LAMELLAR COVERING AND SPRING ELEMENT FOR A LAMELLAR COVERING
FERMETURE À LAMELLES ET ÉLÉMENT ÉLASTIQUE POUR UNE FERMETURE À LAMELLES

(30) Priorität: 24.06.2011 DE 102011051316; 15.09.2011 DE 102011053643
(43) Veröffentlichungstag der Anmeldung: 30.04.2014
(73) Patentinhaber: Eitec Führungsbahnschutz-Systeme GmbH, 85301 Schweitenkirchen (DE)
(72) Erfinder: KALESTRA, Horst, 72654 Neckartenzlingen (DE); KELBER, Tobias, 85376 Giggenhausen (DE); STÖHR, Albert, 85570 Markt Schwaben (DE)
(74) Vertreter: Winter, Brandl, Fürniss, Hübner, Röss, Kaiser, Polte - Partnerschaft mbB
(86) Internationale Anmeldenummer: PCT/EP2012/056346
(87) Internationale Veröffentlichungsnummer: WO 2012/175232

(56) Entgegenhaltungen:
- EP-B1- 1 980 361
- WO-A1-2009/030017
- DE-A1- 1 808 334
- DE-A1-102005 013 496
- DE-U1-202004 018 318

## Beschreibung

Die Erfindung betrifft eine Lamellenabdeckung und ein Federelement für eine derartige Lamellenabdeckung.

Entsprechende Lamellenabdeckungen werden insbesondere zur Abdeckung von Arbeitsräumen und Führungsbahnen von Werkzeugmaschinen eingesetzt. Die Lamellenabdeckungen sind in der Regel als Faltenbälge mit vorgesetzten Lamellen, insbesondere Stahl- oder Federstahllamellen, ausgeführt. Die Lamellen bilden hierbei eine geschlossene Abdeckfläche und bieten einen Schutz vor dem Austreten von scharfkantiger Späne, Verunreinigungen und Kühlschmiermittel aus der Werkzeugmaschine.

Die Druckschrift DE 10 2005 013 496 A1 offenbart eine derartige Lamellenabdeckung. Diese hat eine Vielzahl von rechteckförmigen Lamellen, die jeweils mit ihrer Langseite mit einer Faltung eines Faltenbalgs und einem Rahmenelement verbunden sind. Ein jeweiliges Rahmenelement erstreckt sich etwa über die gesamte Länge der Langseite einer jeweiligen Lamelle. Die Lamellen sind derart angeordnet, dass diese sich überdecken. Zwischen den Rahmenelementen ist eine Vielzahl von V-förmig ausgebildeten Federelementen angeordnet, die zur stabilen Relativanordnung der Lamellen zueinander dienen. Diese haben jeweils zwei Schenkel, die sich etwa in Richtung einer Längsachse der Rahmenelemente erstrecken. Die Lamellenabdeckung ist über ihre Rahmenelemente an Führungsschienen verschiebbar gelagert. Eine Breite der Lamellenabdeckung ist in Richtung der Führungsschienen vergrößer- und verkleinerbar, wobei eine maximale Breite durch eine maximale Streckung des Faltenbalgs bestimmt ist.

Die EP 1 871 568 B1 zeigt eine weitere Ausführungsform einer Lamellenabdeckung. Diese hat im Unterschied zur vorbeschriebenen Lösung keinen Faltenbalg. Zwischen den Rahmenelementen sind v-förmig ausgebildete Federelemente angeordnet und zusätzlich zu diesen v-förmige Stabilisierungselemente. Die Scheitel der Stabilisierungselemente erstrecken sich etwa parallel und die Scheitel der Federelemente erstrecken sich etwa senkrecht zur Längsrichtung der Lamellen. Die Stabilisierungselemente dienen zum Dämpfen einer Verschiebebewegung der Lamellen in Richtung ihrer Führungsschienen.

In der EP 1 980 361 B1 sind zur Verbindung von Lamellen einer Lamellenabdeckung o-förmige Verbindungselemente vorgesehen. Diese haben jeweils zwei sich parallel zueinander erstreckende und sich gegenüberliegende Befestigungsabschnitte zur Befestigung zwischen zwei Lamellen, wobei die Befestigungsabschnitte über ihre Endabschnitte verbunden sind. Zwischen den Befestigungsabschnitten ist ein Kopplungselement vorgesehen über das die Befestigungsabschnitte mit einer Kraft beaufschlagt werden, die in Richtung eines sich vergrößernden Abstands zwischen den Befestigungsabschnitten wirkt.

Nachteilig bei den aufgezeigten Lösungen ist, dass die Lamellenabdeckung vorrichtungstechnisch äußerst aufwendig aufgebaut ist.

Demgegenüber liegt der Erfindung die Aufgabe zugrunde eine vorrichtungstechnisch einfach aufgebaute Lamellenabdeckung zu schaffen. Insbesondere ist es die Aufgabe der Erfindung Federelemente zu schaffen, mit denen ein im Wesentlichen gleichmäßiger, im Wesentlichen synchroner Bewegungsablauf der Lamellen relativ zueinander und / oder eine definierte Auszugsbegrenzung zu integrieren und / oder bei vergleichsweise hohen Lamellenabdeckungen eine Längsstabilisierung zu ermöglichen.

Diese Aufgabe wird mit einem Federelement gemäß den Merkmalen des Patentanspruchs 1 und/ oder einer Lamellenabdeckung gemäß den Merkmalen des Patentanspruchs 9 gelöst.

Sonstige vorteilhafte Weiterbildungen der Erfindung sind Gegenstand weiterer Unteransprüche.

Erfindungsgemäß hat ein Federelement zwei zueinander angestellte und über ihre Endabschnitte verbundene Federschenkel. Zwischen zueinander beabstandeten Endabschnitten der Federschenkel ist ein Verbindungselement angeordnet, mit der die maximale Strecklage des Federelements bestimmt ist. Hierdurch ist ein maximaler Abstand zwischen den Rahmenelementen durch die Federelemente mit dem jeweiligen Verbindungselement vorgegeben, womit auf äußerst einfache Weise eine Auszugssperre der Lamellenabdeckung umgesetzt ist. Das Federelement zusammen mit dem Verbindungselement ist vorrichtungstechnisch äußerst einfach aufgebaut, wodurch der Herstellungsaufwand der Lamellenabdeckung wesentlich reduziert ist. Eine Federsteifigkeit des Federelements ist der Masse und den Beschleunigungskräften der Lamellen angepasst, um eine optimale Bewegungsverteilung auf die Lamellen zu erreichen und zu vermeiden, dass sich bei schnellen Bewegungen nur die antriebsseitigen Lamellen bewegen. Das Federelement ist erfindungsgemäß in seiner Abwicklung im Wesentlichen rechteckförmig ausgestaltet, wodurch ein derartiges Federelement aufgrund der einfachen Geometrie mit geringem Herstellungsaufwand gefertigt werden kann.

Erfindungsgemäß hat eine Lamellenabdeckung für Werkzeugmaschinen eine Mehrzahl von Lamellen, die einander überlappen und verschiebbar geführt sind. Diese haben jeweils rückseitig ein Rahmenelement, wobei zwischen benachbarten Rahmenelementen ein Federelement angeordnet ist. Dieses ist bei einer Relativbewegung der dem Federelement zugeordneten Lamellen ausgehend von einer Neutralstellung mit einer Zug- oder Druckspannung spannbar. So ist beispielsweise denkbar, dass bei einer maximalen Strecklage der Lamellenabdeckung, die Neutralstellung etwa in der Mitte der Strecklage - also etwa in der Hälfte der Strecklage - vorgesehen ist. Ein Auszug der Lamellenabdeckung von der Mitte der Strecklage zur maximalen Strecklage kann dann zu einer Zugspannung der Federelemente führen, während ein Einzug der Lamellenabdeckung von der Mitte der Strecklage bis zur minimalen Strecklage zu einer Druckspannung der Federelemente führen kann. Ferner könnte die Neutralstellung auch in der maximalen oder minimalen Strecklage liegen.

In weiterer Ausgestaltung der Erfindung, kann das Verbindungselement als Feder ausgebildet sein, wodurch die Wirkung des Federelements unterstützt wird. Das Verbindungselement kann dabei derart ausgestaltet sein, dass es in einer Neutralstellung spannungslos ist, wobei dann ein Auseinanderschwenken oder ein Zusammenschwenken der Federschenkel jeweils von der Neutralstellung aus zu einem Spannungsaufbau im Verbindungselement führt. Alternativ könnte die Neutralstellung des Verbindungselements die maximale Strecklage oder eine maximale Stauchlage - also der geringste Abstand der Endabschnitte der Federschenkel - des Federelements sein.

Mit Vorteil ist das Verbindungselement einfach blattfederartig ausgestaltet. Hierbei kann es beispielsweise etwa bogenförmig oder etwa dachförmig ausgestaltet sein.

Um das Federelement und das Verbindungselement kostengünstig herzustellen, können diese einstückig ausgebildet sein.

Zusammenlaufende Endabschnitte der Federschenkel sind bevorzugter Weise direkt oder über eine Gelenklasche miteinander verbunden. Ist eine Gelenklasche eingesetzt, so kann über deren Material und Geometrie die Federwirkung des Federelements beeinflusst werden.

In einer weiteren Ausführungsform der Lamellenabdeckung hat diese zwei Federelemente, deren Federschenkel x-förmig angeordnet sind.

Zusätzlich zum Verbindungselement kann zwischen den Federschenkeln eine Zugbegrenzung vorgesehen sein, wodurch in der maximalen Strecklage zusätzlich durch die Zugbegrenzung Spannkräfte aufgenommen werden und eine Belastung des Verbindungselements in der maximalen Strecklage im Wesentlichen nicht weiter steigt.

Die Zugbegrenzung ist bevorzugter weise biegeschlaff ausgestaltet, wodurch die Zug- oder Druckbelastung des Verbindungselements bei einer Relativbewegung der Federschenkel kaum beeinflusst wird.

Vorzugsweise haben die Federelemente im Bereich ihrer beabstandeten Endabschnitte Befestigungsabschnitte zur Verbindung mit den Rahmenelementen.

Um die Federelemente vorteilhaft an den Rahmenelementen festzulegen, erstrecken sich die Befestigungsabschnitte im Wesentlichen parallel zu den Rahmenelementen, wodurch sie gegenüber den Federschenkeln abgewinkelt sind.

Die Lamellenabdeckung kann zusätzlich einen Dichtvorhang aufweisen, um einen insbesondere einen Arbeitsraum einer Werkzeugmaschine hinsichtlich eines Kühlmittels nach außen abzudichten und insgesamt eine Dichtwirkung der Lamellenabdeckung zu erhöhen.

Der Dichtvorhang ist vorzugsweise lösbar an der Lamellenabdeckung befestigt, um diesen beispielsweise für Wartungsarbeiten oder zum Reinigen von der Lamellenabdeckung zu trennen oder ihn nachzurüsten.

Die Befestigung des Dichtvorhangs erfolgt vorzugsweise durch eine Schnappverbindung, die eine einfache und schnelle Montage des Dichtvorhangs ermöglicht.

Erfindungsgemäß hat eine Lamellenabdeckung ein Stabilisierungselement mit zwei Schenkeln. Eine Länge eines jeweiligen Schenkels ist hierbei gleich oder kleiner als eine Breite eines jeweiligen Schenkels.

Die Federschenkel der Federelemente sind vorzugsweise gleich ausgebildet. Des Weiteren ist mit Vorteil eine Länge eines Federschenkels größer als dessen Breite, wodurch das Federelement sehr schmal baut.

Im Folgenden werden bevorzugte Ausführungsformen der Erfindung anhand schematischer Zeichnungen näher erläutert. Es zeigen:
Figur 1 in einer perspektivischen Darstellung eine Lamellenabdeckung;
Figur 2 in einer perspektivischen Darstellung einen Ausschnitt der Lamellenabdeckung;
Figur 3 in einer perspektivischen Darstellung das Federelement in einem ersten nicht erfindungsgemäßen Ausführungsbeispiel für eine Lamellenabdeckung;
Figur 4 eine Rückansicht der Lamellenabdeckung mit dem Federelement gemäß dem ersten Ausführungsbeispiel;
Figur 5 in einer perspektivischen Darstellung das erfindungsgemäße Federelement in einem zweiten Ausführungsbeispiel für eine Lamellenabdeckung;
Figur 6 das Federelement aus der Figur 5 abgewickelt;
Figur 7 in einer perspektivischen Darstellung das erfindungsgemäße Federelement in einem dritten Ausführungsbeispiel für eine Lamellenabdeckung;
Figur 8 das Federelement aus der Figur 7 abgewickelt;
Figur 9 in einer perspektivischen Darstellung die Lamellenabdeckung mit den Federelementen aus Figur 7 und zusätzlichen nicht zur Erfindung gehörender Stabilisierungselementen;
Figur 10 in einer Vorderansicht die Lamellenabdeckung aus Figur 9;
Figur 11 einen vergrößerten Ausschnitt der Lamellenabdeckung aus Figur 10;
Figur 12 in einer perspektivischen Darstellung ein nicht zur Erfindung gehörendes Stabilisierungselement für eine Lamellenabdeckung;
Figur 13 das Stabilisierungselement aus der Figur 12 in einer Seitenansicht;
Figur 14 das Stabilisierungselement aus der Figur 12 in einer Vorderansicht;
Figur 15 das Stabilisierungselement aus der Figur 12 abgewickelt;
Figur 16 in einer perspektivischen Darstellung das Federelement in einem vierten nicht erfindungsgemäßen Ausführungsbeispiel für eine Lamellenabdeckung;
Figur 17 das Federelement aus der Figur 16 in einer Seitenansicht;
Figur 18 in einer perspektivischen Darstellung die Lamellenabdeckung mit den Federelementen aus Figur 16 und zusätzlichen nicht zur Erfindung gehörenden Federelementen;
Figur 19 einen vergrößerten Ausschnitt der Lamellenabdeckung aus Figur 18;
Figur 20 in einer perspektivischen Darstellung das erfindungsgemäße Federelement in einem fünften Ausführungsbeispiel für eine Lamellenabdeckung;
Figur 21 das Federelement aus der Figur 20 abgewickelt;
Figur 22 in einer perspektivischen Darstellung die Lamellenabdeckung mit den Federelementen aus Figur 20;
Figur 23 in einer perspektivischen Darstellung ein nicht zur Erfindung gehörendes Federelement für eine Lamellenabdeckung;
Figur 24 das Federelement aus der Figur 23 abgewickelt;
Figur 25a bis e die Lamellenabdeckung mit den Federelementen aus Figur 23;
Figur 26 in einer perspektivischen Darstellung ein nicht zur Erfindung gehörendes Federelement für eine Lamellenabdeckung;
Figur 27 das Federelement aus der Figur 26 abgewickelt;
Figur 28 in einer perspektivischen Darstellung das Federelement in einem sechsten nicht erfindungsgemäßen Ausführungsbeispiel für eine Lamellenabdeckung;
Figur 29 in einer perspektivischen Darstellung die Lamellenabdeckung;
Figur 30 in einer perspektivischen Darstellung die Lamellenabdeckung mit einem Dichtvorhang;
Figur 31 einen vergrößerten Ausschnitt der Lamellenabdeckung aus Figur 30;
Figur 32 in einer vergrößerten Darstellung ein Verbindungselement für den Dichtvorhang;
Figur 33 einen vergrößerten Ausschnitt der Lamellenabdeckung aus Figur 30;
Figur 34 in einer perspektivischen Darstellung das erfindungsgemäße Federelement in einem siebten Ausführungsbeispiel für eine Lamellenabdeckung;
Figur 35 in einer perspektivischen Darstellung das erfindungsgemäße Federelement in einem achten Ausführungsbeispiel für eine Lamellenabdeckung.

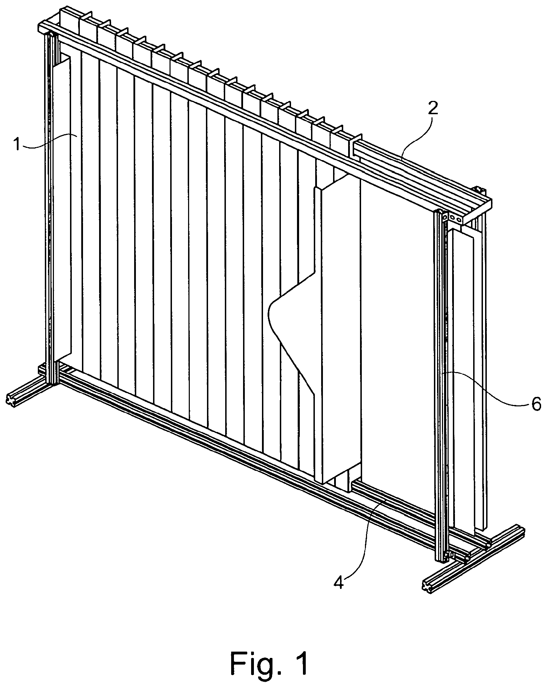

Figur 1 zeigt in einer perspektivischen Darstellung eine Vorderansicht einer Lamellenabdeckung 1 gemäß einem Ausführungsbeispiel. Diese wird als Schutzabdeckung für Führungsbahnen von Werkzeugmaschinen eingesetzt.

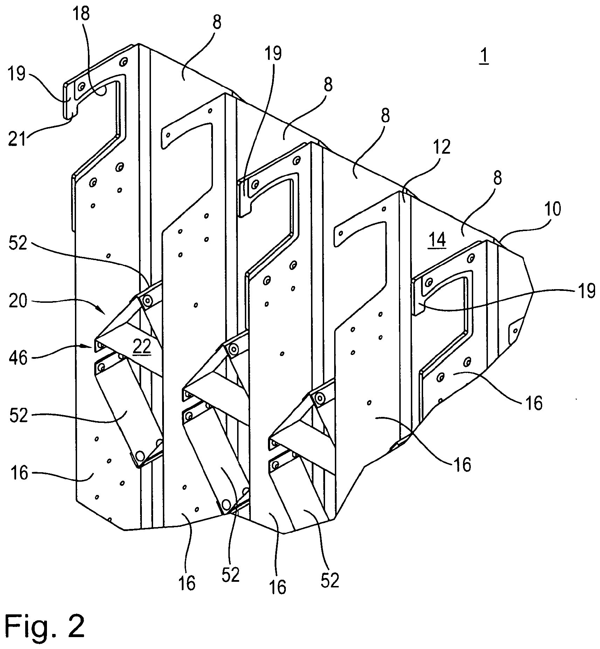

Die Lamellenabdeckung 1 ist hierbei an einer in der Figur 1 oberen Führungsschiene 2 verschiebbar aufgehängt und an einer unteren Führungsschiene 4 geführt, wobei die Führungsschienen 2 und 4 Teil eines Führungsrahmens 6 sind. Ein genauerer Aufbau der Lamellenabdeckung 1 wird anhand der folgenden Figur 2 erläutert.

Figur 2 zeigt in einer perspektivischen Rückansicht einen vergrößerten Ausschnitt der Lamellenabdeckung 1 aus Figur 1. Diese hat eine Vielzahl von Lamellen 8, insbesondere Stahllamellen, mit einem im Wesentlichen rechteckförmigen Umfang. Eine jeweilige Lamelle 8 hat jeweils zwei sich in ihrer Längsrichtung erstreckende leicht abgewinkelte Seitenabschnitte 10 und 12, wobei in der Figur 2 der besseren Darstellbarkeit halber nur die Seitenabschnitte 10 und 12 der rechten Lamelle 8 mit einem Bezugszeichen versehen sind. Die Seitenabschnitte 10 und 12 sind dabei jeweils in Richtung einer Rückseite 14 der Lamelle 8 abgewinkelt. An den sich in der Figur 2 linken Seitenabschnitt 10 schließt sich ein Rahmenabschnitt bzw. ein Rahmenelement 16 an, das etwa rechtwinklig zur Lamelle 8 abgewinkelt ist. Die Lamellen 8 weisen durch ihr Rahmenelement 16 einen etwa L-förmigen Querschnitt auf. Die Rahmenelemente 16 erstrecken sich im Wesentlichen parallel zueinander. An ihrem oberen Endabschnitt haben die Rahmenelemente 16 jeweils eine Aussparung 18, durch die die obere Führungsschiene 2 aus Figur 1 hindurchgeführt ist. Bei jedem zweiten Rahmenelement 16 ist die Aussparung 18 durch ein Blech 19 mit einer hakenförmigen Aussparung verstärkt, wobei ein Hakenvorsprung 21 des Blechs 19 die obere Führungsschiene 2 im montierten Zustand übergreift. Über die Aussparungen 18 und die Bleche 19 ist die Lamellenabdeckung 1 dann an der Führungsschiene 2 aus Figur 1 eingehängt.

Eine jeweilige Lamelle 8 überdeckt mit ihrem in der Figur 2 rechten Seitenabschnitt 10 die jeweils benachbarte Lamelle 8, wobei sie im Wesentlichen an einer Vorderseite der überdeckten Lamelle 8 anliegt. Eine Größe der Überdeckung der Lamellen 8 bzw. ein Abstand der Rahmenelemente 16 zueinander ist in Längsrichtung der Führungsschiene 2 aus Figur 1 veränderbar. In der Figur 2 ist die geringste Überdeckung der Lamellen 8 und somit der größte Abstand der Rahmenelemente 16 zueinander dargestellt. Diese maximale Strecklage wird durch Federelemente 20, die ein Verbindungselement 22 aufweisen, begrenzt. Zumindest ein Federelement 20 ist jeweils zwischen zwei benachbarten Rahmenelementen 16 angeordnet.

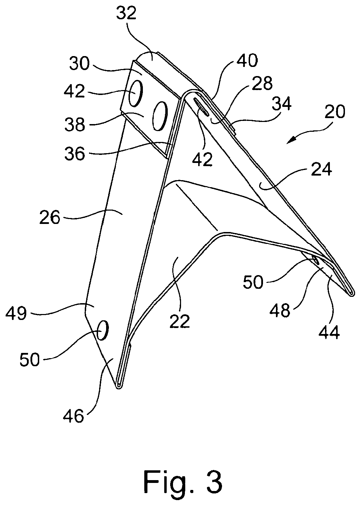

Figur 3 zeigt in einer vergrößerten perspektivischen Darstellung das Federelement 20 mit dem Verbindungselement 22 gemäß einer ersten Ausführungsform. Das Federelement 20 hat zwei v-förmig zueinander angeordnete Federschenkel 24 und 26, die im Bereich ihrer zusammenlaufenden Endabschnitte 28 bzw. 30 über eine Gelenklasche 32 miteinander verbunden sind. Ein jeweiliger Federschenkel 24 und 26 ist im Wesentlichen rechteckförmig ausgebildet. Die Gelenklasche 32 hat im Wesentlichen die gleiche Breite wie ein jeweiliger Federschenkel 24 und 26 und ist jeweils mit einem Halteabschnitt 34 und 36 am Endabschnitt 28 bzw. 30 festgelegt. Hierfür ist auf jedem Halteabschnitt 34 und 36 eine Halteplatte 38 bzw. 40 angeordnet, womit die Gelenklasche 32 somit mit ihrem jeweiligen Halteabschnitt 34 und 36 zwischen der Halteplatte 40 bzw. 38 und dem Endabschnitt 28 bzw. 30 der Federschenkel 24 bzw. 26 angeordnet ist. Die jeweilige Halteplatte 40 und 38 ist mit dem jeweiligen Halteabschnitt 34 bzw. 36 der Gelenklasche 32 und den jeweiligen Endabschnitt 28 bzw. 30 des Federschenkels 24 bzw. 26 über eine Nietverbindung 42 fest verbunden.

Die Gelenklasche 32 ist dabei derart ausgestaltet, dass bei einer Relativbewegung der Federschenkel 24 und 26 zueinander aus einer Neutralposition diese gespannt wird, wodurch eine Federkraft entgegen der Bewegungsrichtung der Federschenkel 24 und 26 auf diese wirkt. Alternativ kann die Gelenklasche 32 biegeschlaff sein, damit eine Federwirkung des Federelements 20 durch das Verbindungselement 22 erfolgt, was im Folgenden beschrieben ist.

Zwischen voneinander beabstandeten Endabschnitten 44 und 46 der Federschenkel 24 bzw. 26 ist das Verbindungselement 22 fest angeordnet. Das blattfederartig ausgebildete Verbindungselement 22 hat eine Breite, die etwa der Breite der Federschenkel 24 und 26 entspricht. Mit seinen Endabschnitten ist das Verbindungselement 22 in einer jeweiligen Faltung der Endabschnitte 44 bzw. 46 angeordnet. Die Faltung erfolgt dadurch, dass die Endabschnitte 44 und 46 jeweils hin zum benachbarten Federschenkel 26 bzw. 24 gefaltet sind, wodurch eine sich quer zur Längsrichtung der Federschenkel 26 bzw. 24 erstreckende Scheitellinie gebildet ist. Das Verbindungselement 22 ist dann mit seinen Endabschnitten zur jeweiligen Scheitellinie der Faltungen geführt. Die Endabschnitte 44 und 46 haben somit jeweils einen abgewinkelten Faltabschnitt 48 und 49. Der jeweilige Faltabschnitt 48 und 49 weist dann zusammen mit den Endabschnitten des Verbindungselements 22 und dem Federschenkel 24 bzw. 26 koaxiale Bohrungen auf, um durch diese beispielsweise eine Schraub- oder Nietverbindung 50 hindurchzuführen.

Das Verbindungselement 22 wird in Eck- bzw. Kantbereichen der Endabschnitte 44 und 46 befestigt, wodurch bei einer unterschiedlichen Belastung des Federelements 20 über die Breite gesehen eine maximale Strecklage des Federelements 20 im Wesentlichen gleich bleibt. Würde beispielsweise das Verbindungselement 20 jeweils nur in einem Eckbereich mit dem Federelement 20 verbunden werden, so könnte eine Torsionsbelastung der Federschenkel 24 und/oder 26, aufgrund eines Verschwenkens der Lamellen 8 um ihre Längsachse, zu einer Beabstandung der nicht an dem Verbindungselement 20 festgelegten Eckbereiche des Federelements führen, die die maximale Strecklage übersteigt.

Das Verbindungselement 22 besteht aus einem Nylon-Gewebe und kann selbstfedernd ausgebildet sein. Ist es nicht selbstfedernd ausgebildet, so stellt es nur eine Auszugsbegrenzung dar und nimmt Zugkräfte auf. Ist es selbstfedernd ausgebildet, so, wird bei einer Auslenkung der Federschenkel 24 und 26 dieses gespannt und eine Federkraft aufbaut, die entgegen der Auslenkrichtung bzw. Bewegungsrichtung der Federschenkel 24 und 26 wirkt.

Befestigt wird das Federelement 20 zusammen mit dem Verbindungselement 22 jeweils zwischen zwei Rahmenelementen 16 aus Figur 2. Hierzu sind die zueinander beabstandeten Endabschnitte 44 und 46 der Federschenkel 24 bzw. 26 mit den Rahmenelementen 16 vernietet. Die Befestigung der Federelemente erfolgt dabei in deren Eckbereichen, wobei Kräfte zwischen den Rahmenelementen und der Federelementen im Wesentlichen gleichmäßig über die Befestigungsmittel (Niet) übertragen werden. Die Endabschnitte 44 und 46 sind zusammen mit ihren Faltabschnitten 48 bzw. 49 und den Endabschnitten des Verbindungselements 22 abgewinkelt, siehe Figur 2, wodurch diese sich etwa parallel zum jeweiligen Rahmenelement 16 erstrecken.

Ein Scheitel 52 der Federelemente 20 ist in der Figur 2 im Wesentlichen mittig zwischen zwei Rahmenelementen 16 angeordnet, erstreckt sich etwa quer zur Längsachse der Rahmenelemente 16 und weist mit seinen zusammenlaufenden Endabschnitten nach oben. Das Verbindungselement 22 ist in der Figur 2 in seiner gestreckten Stellung dargestellt, wodurch ein maximaler Abstand zwischen den Rahmenelemente 16 gezeigt ist.

Zusätzlich zu den Federelementen 20 mit ihren Verbindungselementen 22 können jeweils zwischen den Rahmenelementen 16 aus Figur 2 weitere Federelemente 20 ohne Verbindungselemente 22 angeordnet sein. Dies ist in der Figur 2 beispielhaft mit Federelementen 52 dargestellt.

Mit den Federelementen 20 werden die Lamellen 8 zu einer schnellbeweglichen, teleskopartigen und verschiebbaren Schutzwand.

Bei einer weiteren Ausführungsform ist das Verbindungselement 22 des Federelements 20 in Figur 3 derart ausgestaltet, dass es von einer Neutralstellung aus bei einem Auseinanderschwenken der Federschenkel 24 und 26 mit einer Zugspannung und bei einem Aufeinanderzuschwenken der Federschenkel 24 und 26 - von der Neutralstellung aus - mit einer Druckspannung beaufschlagt ist. Derartige Federelemente 20 führen dann im eingebauten Zustand, siehe Figur 1 und 2, dazu, dass die Lamellenabdeckung 1 in ihrer maximalen Strecklage durch die Federelemente 20 unter Zugspannung und in ihrer minimalen Strecklage unter Druckspannung steht.

Des Weiteren ist denkbar, dass das Federelemente 20 aus Figur 3 in einem Zustand, bei dem die Federschenkel 24 und 26 vollständig aufeinander zugeschwenkt sind, sich in der Neutralstellung befindet und durch voneinander wegschwenken der Federschenkel 24 und 26 gespannt wird:

Alternativ könnte das Federelement 20 in der in Figur 2 gezeigten Stellung in seiner Neutralstellung sein und bei einem aufeinander zuschwenken der Federschenkel 24 und 26 gespannt werden.

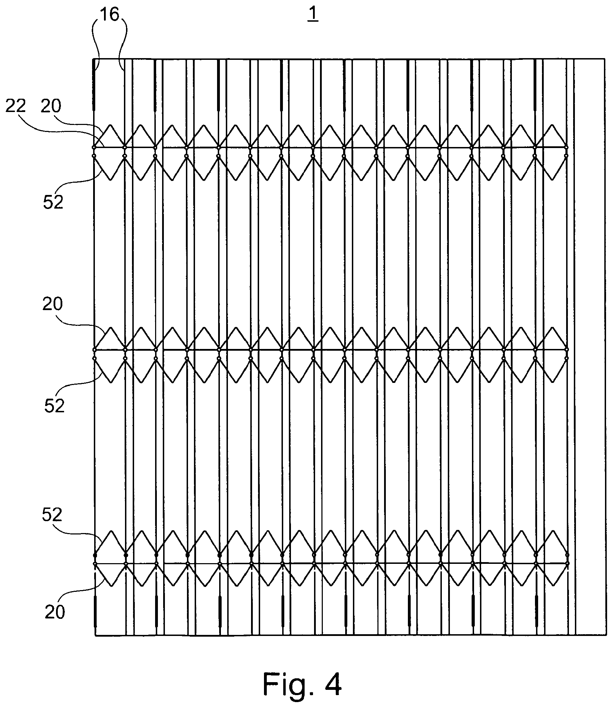

Figur 4 zeigt eine Rückansicht der Lamellenabdeckung 1 gemäß dem Ausführungsbeispiel. Hierbei ist erkennbar, dass zwischen zwei benachbarten Rahmenelementen 16 jeweils 3 Federelemente 20 mit einem Verbindungselement 22 angeordnet sind. Eines davon ist etwa mittig, in Längsrichtung der Rahmenelemente 16 gesehen, angeordnet, während die anderen jeweils in einem Endbereich angeordnet sind. Das obere und mittlere Federelement 20 weist hierbei mit seinem zusammenlaufenden Federschenkeln nach oben, während das untere Federelement 20 nach unten weist. Zusätzlich ist jeweils benachbart, in Längsrichtung gesehen, zu einem Federelement 20 ein weiteres Federelemente 52 angeordnet. Dieses weist dabei jeweils in die entgegengesetzte Richtung des unmittelbar benachbarten Federelements 20, wodurch die beiden oberen Federelemente 52 in der Figur 4 nach unten weisen, während das untere Federelement 52 nach oben weist. Des Weiteren haben die Federelemente 52 kein Verbindungselement.

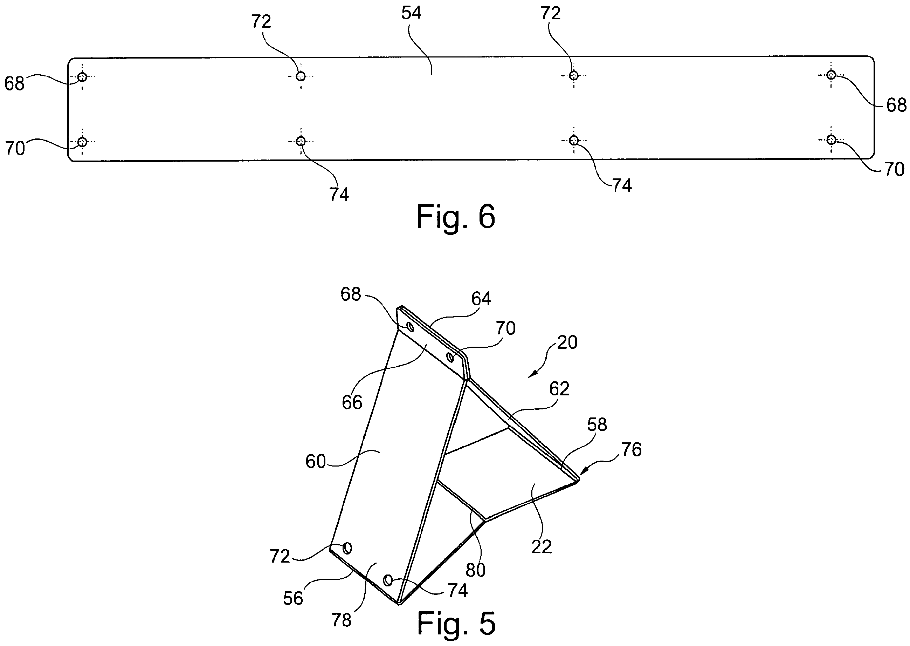

Figur 5 zeigt in einer perspektivischen Darstellung eine weitere Ausführungsform eines Federelements 20 zusammen mit einem Verbindungselement 22. Im Unterschied zur Ausführungsform aus Figur 3 ist dieses einstückig ausgebildet, was in Figur 6 verdeutlicht ist. Diese Figur zeigt das Federelement 20 abgewickelt. Im abgewickelten Zustand bildet dieses ein im Wesentlichen rechteckförmiges Element 54. Das Federelement 20 besteht aus einem Kunststoff, beispielsweise Polypropylen.

Das Element 54 aus der Figur 6 ist mehrfach quer zu seiner Längsrichtung im Wesentlichen symmetrisch gefaltet, wobei durch zwei Faltungen 56, 58, siehe Figur 5, Federschenkel 60, 62 des Federelements 20 und das Verbindungselement 22 gebildet sind. Zusammenlaufende Endabschnitte 64, 66 der Federschenkel 62 bzw. 60 sind wiederum derart gefaltet, dass sie parallel zueinander bündig anordbar sind. Die Endabschnitte 64 und 66 weisen jeweils zwei Bohrungen 68, 70 auf, siehe auch Figur 6, die zum Verbinden der Endabschnitte 64 und 66 koaxial zueinander angeordnet werden, um durch diese ein Verbindungsmittel, beispielsweise eine Schraubverbindung oder eine Nietverbindung, hindurchzuführen. Benachbart zur Faltung 56 und 58 weisen die Federschenkel 60 bzw. 62 ebenfalls jeweils zwei Bohrungen 72, 74 auf, siehe Figur 5 und 6, über die das Federelement 20, beispielsweise über eine Schraub- oder Nietverbindung, mit den Rahmenelementen 16 aus Figur 2 fest verbunden wird. Die die Bohrungen 72 und 74 aufweisenden Endabschnitte 76 und 78 der Federschenkel 62 bzw. 60 können abgewinkelt sein, damit diese parallel zum Rahmenelement 16 aus Figur 2 verlaufen. Etwa mittig hat das Verbindungselement 22 eine sich etwa parallel zur Faltung 56 und 58 erstreckende Falte 80, wodurch das Verbindungselement 22 dachförmig ausgestaltet ist. Werden die Federschenkel 60 und 62 aufeinander zu bewegt, so wird die Falte 80 in Richtung der zusammenlaufenden Endabschnitte 64 und 66 verschoben. Denkbar ist auch das Verbindungselement 22 bogenförmig auszugestalten. Hinsichtlich der beaufschlagbaren Spannungen des Federelements 20 aus Figur 5 wird auf die Figurenbeschreibung der Figuren 1 bis 3 verwiesen.

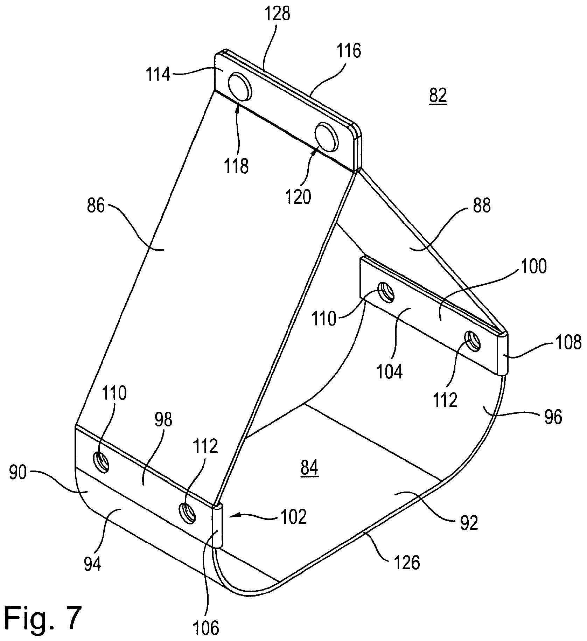

Figur 7 zeigt in einer perspektivischen Darstellung ein Federelement 82 gemäß einer weiteren Ausführungsform. Dieses ist einstückig ausgebildet und wird beispielsweise aus einem Blech oder aus einem Kunststoff hergestellt. Ein Verbindungselement 84 über die die V-förmig ausgebildeten Federschenkel 86 und 88 miteinander verbunden sind ist bogenförmig ausgebildet, wobei es mit ihrer konvexen Außenseite 90 weg von den Federschenkeln 86 und 88 weist. Das Verbindungselement 84 hat in seinem in der Figur 7 gezeigten entspannten Zustand einen etwa ebenen mittleren Abschnitt 92 und zwei daran anschließende zu den Federschenkeln 86 bzw. 88 führende gebogene Abschnitte 94 bzw. 96. Da die konvexe Außenseite 90 des Verbindungselements 84 weg von den Federschenkeln 86 und 88 weist, kann das Verbindungselement 84 im Wesentlichen unabhängig von den Federschenkeln 86 und 88 ausgebildet werden. Dagegen wäre bei einer Anordnung des Verbindungselements 84 mit einer zu dem Federschenkel 86 und 88 weisenden Außenseite der Bauraum zwischen den Federschenkeln 86 und 88 für das bogenförmige Verbindungselement 84 sehr begrenzt.

Verbindungsabschnitte 98 und 100 zwischen den Federschenkeln 86 und 88 und den gebogenen Abschnitten 94 bzw. 96 des Verbindungselements 84 sind angewinkelt zum jeweiligen Federschenkel 86 bzw. 88 ausgebildet. Die Verbindungsabschnitte 98 und 100 sind dabei derart angewinkelt, dass sie sich im Wesentlichen parallel zu Rahmenelementen erstrecken, zwischen denen das Federelement 82 befestigt wird. Die gebogenen Abschnitte 94 und 96 erstrecken sich im Wesentlichen tangential zum jeweiligen Verbindungsabschnitt 98 bzw. 100. Die Verbindungsabschnitte 98 und 100 sind über ein Beilagplättchen 102 bzw. 104 verstärkt. Diese sind einstückig mit dem Federelement 82 an einer jeweiligen Kurzseite 106 und 108 der Verbindungsabschnitte 98 bzw. 100 verbunden. Ein jeweiliges Beilagplättchen 102 und 104 erstreckt sich dabei im geringen Abstand oder liegt im Wesentlichen am jeweiligen Verbindungsabschnitt 98 bzw. 100 an. Zur Befestigung des Federelements 82 an Rahmenelementen sind jeweils zwischen den Verbindungsabschnitten 98 und 100 mit ihren Beilagplättchen 102 bzw. 104 zwei Durchgangsbohrungen 110 bzw. 112 ausgebildet, über die das Federelement 82 beispielsweise mit Lamellen verschraubt oder vernietet wird. Im eingebauten Zustand der Federelemente 82 würde ein Schraub- oder Nietkopf auf den Beilagplättchen 102 und 104 anliegen. Die Beilagplättchen 102 und 104 führen dazu, dass bei einer Belastung der Federelemente 82 Spannungen vergleichsweise gleichmäßig über die Schraub- oder Nietköpfe 102 auf die Schrauben oder Nieten übertragen werden.

Die Federschenkel 86 und 88 sind auf ihren vom Verbindungselement 84 weg weisenden Endabschnitten 114 und 116 verbunden. Hierzu sind die Endabschnitt 114 und 116 zum jeweiligen Federschenkel 86 bzw. 88 angewinkelt, womit sie sich etwa parallel zu den Verbindungsabschnitten 98 bzw. 100 in Richtung weg vom Verbindungselement 84 erstrecken. Eine Breite der Endabschnitte 114 und 116 entspricht dabei im Wesentlichen einer Breite der Verbindungsabschnitte 98 bzw. 100. Die Endabschnitte 114, 116 liegen mit ihren aufeinander zuweisenden Seitenflächen im Wesentlichen aneinander an und weisen jeweils zwei Durchgangsbohrungen 118 und 120 auf, die etwa gegenüberliegend koaxial zueinander angeordnet sind, wodurch in der Figur 7 jeweils eine Niete durch die jeweiligen Durchgangsbohrungen 118 und 120 zum Vernieten der Endabschnitte 114 und 116 durchgeführt ist.

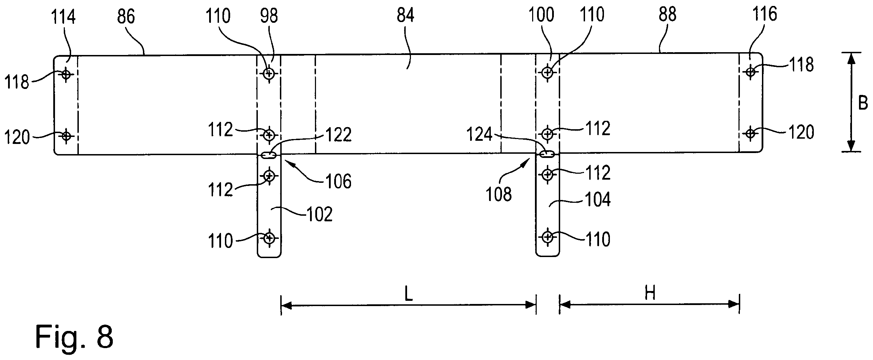

Figur 8 stellt das Federelement 82 aus Figur 7 abgewickelt in einer Draufsicht dar. Hierbei ist erkennbar, dass die Endabschnitte 114, 116 die Verbindungsabschnitte 98, 100 und die Beilagplättchen 102, 104 etwa einen gleichen rechteckförmigen Querschnitt aufweisen, wobei sie eine Breite von etwa 10 mm und eine Länge von etwa 40 mm haben können. Besteht das Federelement 82 aus einem Blech, so kann dies zusammen mit den Bohrungen 118, 120, 110, 112 und den Beilagplättchen 102, 104 beispielsweise aus einem Blechstreifen durch eine geeignete Maschine ausgestanzt werden. In eine jeweilige Kurzseite 106 bzw. 108 zwischen dem Verbindungsabschnitt 98 bzw. 100 und den Beilagplättchen 102 bzw. 104 ist ein sich entlang der jeweiligen Kurzseite 106 bzw. 108 erstreckendes Langloch 122 bzw. 124 eingebracht. Hierdurch werden beim Biegen der Beilagplättchen 102 und 104 um ihre jeweilige Kurzseite 106 bzw. 108 zum Verbindungsabschnitt 98 bzw. 100 im Bereich der Kurzseite 106 bzw. 108 hohe Spannungen aufgrund eines Kraftflusses um das jeweilige Langloch 122 bzw. 124 herum aufgebaut, wodurch sich die Verbindungsabschnitte 98 bzw. 100 und die Beilagplättchen 102 bzw. 104 im Bereich ihrer Kurzseiten 106 bzw. 108 vergleichsweise leicht, insbesondere plastisch, verformen und die Beilagplättchen 102 bzw. 104 in ihrer gebogenen Position, wie sie in der Figur 7 dargestellt ist, im Wesentlichen verbleiben. Bei der Herstellung werden die Beilagplättchen 102 und 104 derart verschwenkt, dass diese in der Figur 7 innerhalb des Federelements 82 angeordnet sind, wodurch das Federelement 82 mit ihrem Verbindungsabschnitt 98 bzw. 100 im befestigten Zustand nicht von einem jeweiligen Rahmenelement beabstandet ist.

In der Figur 8 beträgt eine Länge L des Verbindungselements 84 etwa 104,5 mm und eine Länge H eines jeweiligen Federschenkels 86 und 88 etwa 73,3 mm. Eine Breite B der Federschenkel 86, 88 und des Verbindungselements 84 beträgt etwa 40mm. Eine Dicke des Federelements in Darstellung in Figur 8 in Richtung der Zeichenebene beträgt etwa 1 mm. In der Figur 7 beträgt ein Abstand der Verbindungsabschnitte 98 und 110 des Federelements 82 etwa 85,2 mm und eine Gesamthöhe zwischen einer Unterseite des mittleren Abschnitt 92 des Verbindungselements 84 und einer in der Figur 7 oberen Langseite 128 eines oberen Endabschnitts 114 oder 116 etwa 99,4 mm. Die Durchgangsbohrungen in der Figur 8 können einen Durchmesser von 4,4 mm haben.

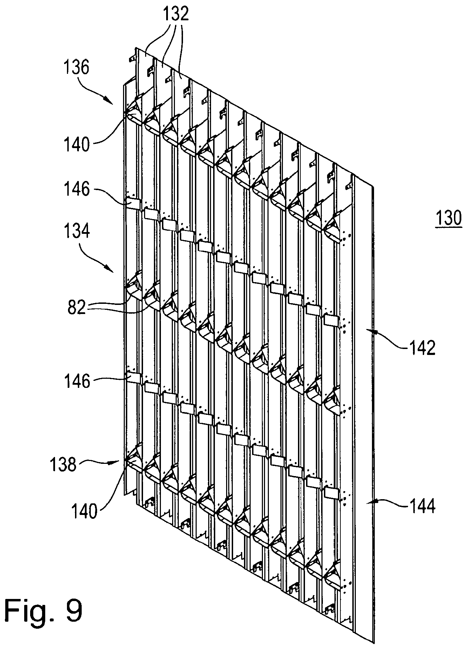

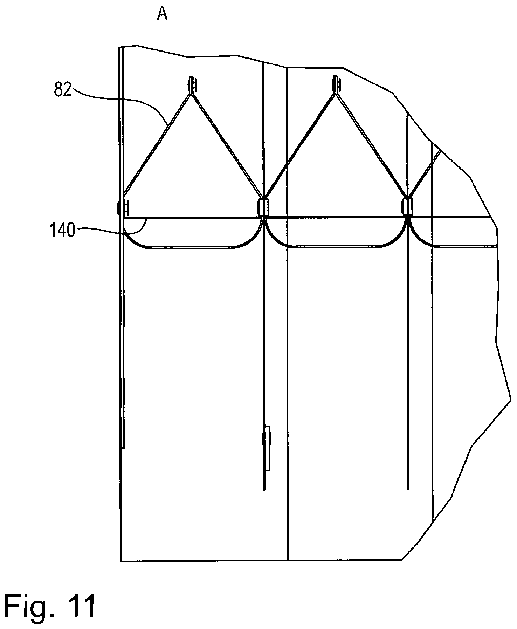

Figur 9 zeigt eine Lamellenabdeckung 130, bei der die Lamellen 132 über fünf parallel zueinander beabstandeter Reihen mit Federelementen verbunden sind. In der mittleren Reihe 134 in der Figur 9 sind hierbei die Federelemente 82 aus der Figur 7 und 8 angeordnet. Die oberste und unterste Reihe 136 und 138 von Federelementen zeigt dabei die Federelemente 82 aus den Figuren 7 und 8, wobei zusätzlich ein weiteres Verbindungselement 140 vorgesehen ist, wobei dies untenstehend mit Bezug zu Figur 11 näher erläutert ist. Zwischen der oberen Reihe 136 und der mittleren Reihe 134 und zwischen der mittleren Reihe 134 und der unteren Reihe 138 ist jeweils eine Reihe 142 bzw. 144 vorgesehen, in der Stabilisierungselemente 146 zwischen den Lamellen 132 angeordnet sind, deren Schenkel sich nicht in Längsrichtung der Lamellen sondern quer dazu erstrecken, wobei diese hin zu den Lamellen 132 weisen. Diese dienen hierbei zur Längsstabilisierung der Lamellen 132 in ihrer Längsrichtung, da ein Biegewiderstandsmoment der Stabilisierungselemente 146 bei dieser Ausrichtung in der Längsrichtung vergleichsweise hoch ist. Die Stabilisierungselemente 146 sind unten stehen näher erläutert.

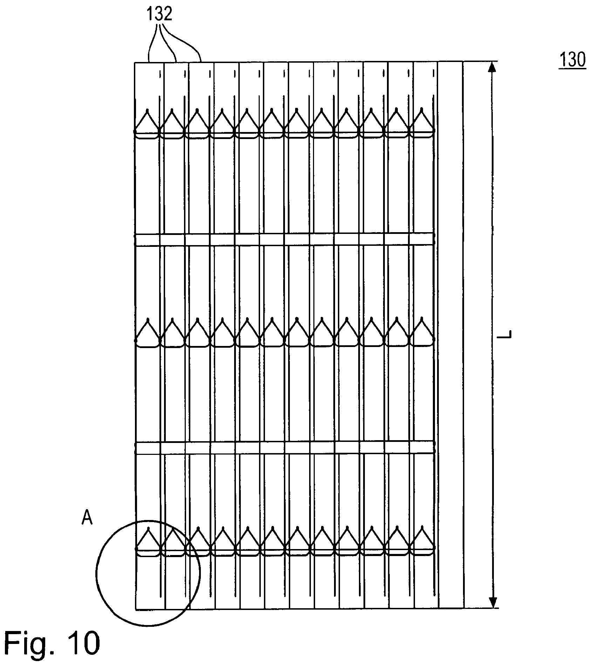

Figur 10 stellt die Lamellenabdeckung 130 aus der Figur 9 in einer Seitenansicht dar. Eine Länge L der Lamellen 132 kann hierbei etwa 1840 mm betragen.

Figur 11 zeigt einen vergrößerten Ausschnitt A aus der Figur 10, wobei es sich um einen in der Figur 10 linken unteren Eckbereich der Lamellenabdeckung 130 handelt. Hierbei sind die Federelemente 82 aus Figur 7 zusammen mit dem zusätzlichen Verbindungselement bzw. einer Zugbegrenzung 140 dargestellt. Hierbei kann es sich um das gleiche Verbindungselement der Figur 2 und 3, siehe Bezugszeichen 22, handeln. Zur Befestigung am Federelement 82 wird das Verbindungselement 140 mit seinen Endabschnitten zwischen den Verbindungsabschnitten 98 und 100 und einem diesen jeweils zugeordneten Beilagplättchen 102 bzw. 104 angeordnet und über beispielsweise eine Nietverbindung mit diesem verbunden. Das Verbindungselement 140 kann dabei derart ausgestaltet sein, dass es die Strecklage des Federelements 82 begrenzt, wobei in der Figur 11 eine maximale Strecklage dargestellt ist, und ansonsten im Wesentlichen bei einer Bewegung der Federschenkel 86 und 88 aus ihrer maximalen Strecklage keine Zug- bzw. Druckkräfte aufbaut. Die Beilagplättchen 102 und 104 aus Figur 7 haben somit zusätzlich zur Verstärkung der Verbindungsabschnitte 98 bzw. 100 die Aufgabe, das Verbindungselement 140 festzulegen, wodurch eine Montage des Verbindungselement 140 stark vereinfacht ist.

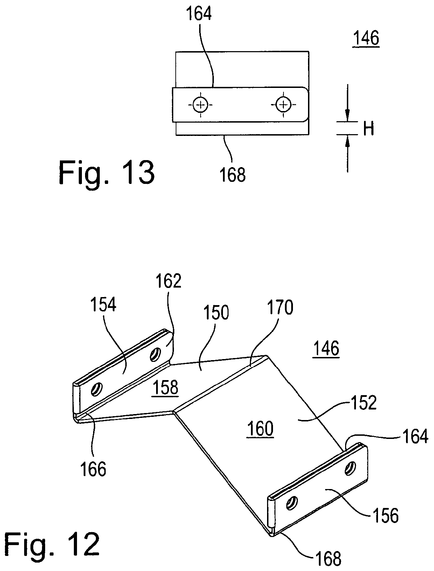

Figur 12 zeigt ein Federelement aus Figur 9, in einer perspektivischen Darstellung, das zusätzlich zur Längsstabilisierung der Lamellen 132 eingesetzt ist und somit ein Stabilisierungselement 146 ist. Dieses ist einstückig ausgebildet, wobei entsprechend den vorhergehenden Ausführungsbeispielen zwei Federschenkel 150, 152 V-förmig zueinander angeordnet sind. Beabstandete Endabschnitte 154 und 156 der Federschenkel 150 bzw. 152 sind dabei im Unterschied zu den vorhergehenden Ausführungsformen in der Figur 12 nach oben, also hin zu den Außenseiten 158 bzw. 160 der Federschenkel 150 bzw. 152 gebogen. Die Endabschnitte 154 und 156 sind von ihrer Ausgestaltung entsprechend wie die Verbindungsabschnitte 98 und 100 des Federelements 82 aus Figur 7 ausgebildet und weisen somit einstückig angeordnete Beilagplättchen 162, 164 auf, allerdings sind die Endabschnitte 154 und 156 etwas breiter als ein jeweiliges Beilagplättchen 162 bzw. 164. Hierdurch sind die Beilagplättchen 162 und 164 von einem Scheitel 166 bzw. 168 zwischen einem jeweiligen Federschenkel 158 und 160 und einem jeweiligen Endabschnitt 154 und 156 beabstandet. Dies ist in der Figur 13 verdeutlicht.

Die Figur 13 zeigt eine Seitenansicht des Stabilisierungselements 146. Hierbei ist der Abstand H zwischen dem Scheitel 168 und den Beilagplättchen 164 dargestellt. Dieser beträgt etwa ein Drittel der Breite des Beilagplättchens 164, wobei eine Oberseite des Beilagplättchens 164 und des Endabschnitts 156 im Wesentlichen deckungsgleich sind.

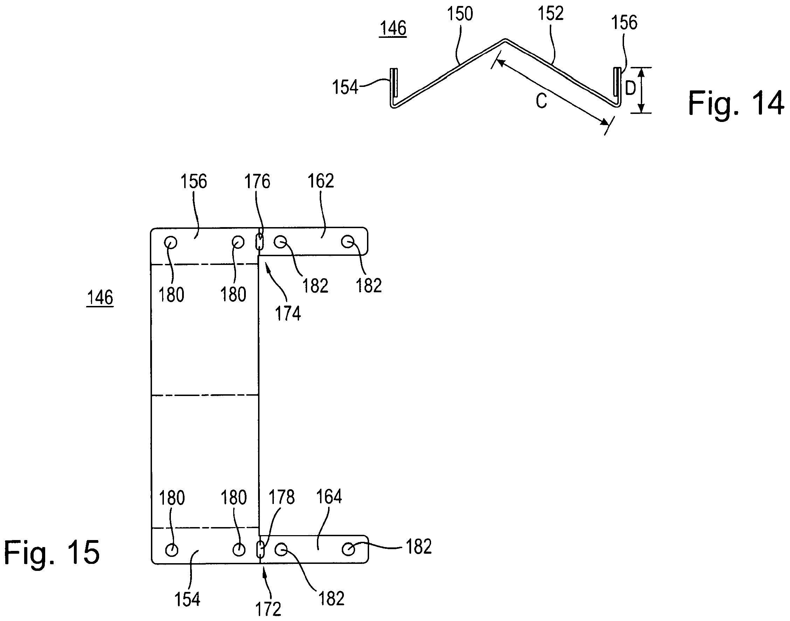

In der Figur 14 ist eine Vorderansicht des Stabilisierungselements 146 dargestellt. Eine Länge C eines Federschenkels 152 bzw. 154 beträgt etwa 48 mm und ist somit deutlich kürzer als beispielsweise die Federschenkel des Federelements 82 aus der Figur 7. Hierdurch ist das Stabilisierungselement 146 vergleichsweise kompakt und mechanisch steif aufgebaut, was zu einer äußerst effektiven Längskompensation der Lamellen 132, siehe Figur 9, führt. Eine Höhe D der Endabschnitte 154 bzw. 156 beträgt hierbei etwa 14 mm. Im eingebauten Zustand, siehe Figur 9, weisen die Stabilisierungselemente 146 mit ihrem Scheitel 170, siehe Figur 12, in Richtung der Lamellen 132, wobei sich der Scheitel 170 etwa parallel zur Längsrichtung der Lamellen 132 erstreckt.

Figur 15 stellt das Stabilisierungselement 146 abgewickelt dar. Hierbei ist erkennbar, das an Kurzseiten 172 und 174, über die die Endabschnitte 156 bzw. 154 mit den Beilagplättchen 162 bzw. 164 verbunden sind, ein sich entlang einer jeweiligen Kurzseite 172 bzw. 174 erstreckendes Langloch 176 bzw. 178 eingebracht ist. Hierdurch treten beim Biegen der Beilagplättchen 162 und 164 bei der Herstellung des Stabilisierungselements 146 im Bereich der Kurzseiten 172 und 174 vergleichsweise große Spannungen auf, wodurch sich dieser Bereich vorteilhafter Weise plastisch verformt und die Beilagplättchen 162 und 164 in ihrem abgewinkelten Zustand verbleiben. Zur Befestigung des Stabilisierungselements 146 sind in den Endabschnitten 154 und 156 Bohrungen 180 eingebracht, die sich jeweils mit in den Beilagplättchen 162 und 164 eingebrachte Bohrungen 182 im montierten Zustand überdecken und das Stabilisierungselement 146 über die Bohrungen mit den Lamellen 132 aus Figur 9 vernietet oder verschraubt ist.

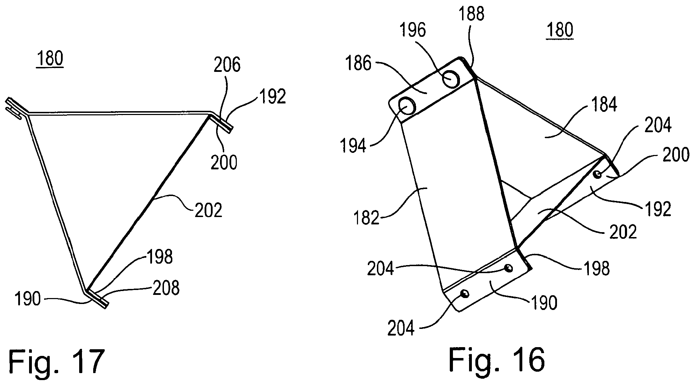

Figur 16 zeigt eine weitere Ausführungsform eines Federelements 180, das im Unterschied zu den Ausführungsformen des Federelements 20 aus den Figuren 1 bis 3 keine Gelenklasche aufweist, sondern wobei v-förmig angestellte Federschenkel 182 und 184 direkt mit ihren zusammenlaufenden Endabschnitten 186 bzw. 188 verbunden sind. Ein jeweiliger Endabschnitt 186 und 188 ist dabei zu seinem Federschenkel 182 bzw. 184 angewinkelt, wodurch sich die Endabschnitte 186 und 188 parallel zueinander erstrecken und mit ihren aufeinander zuweisenden Seitenflächen bündig aneinander anliegen. Die Endabschnitte 186 und 188 weisen hierbei von den zueinander beabstandeten Endabschnitten 190 bzw. 192 der Federschenkel 182 bzw. 184 weg. Die Endabschnitte 186 und 188 haben jeweils zwei Durchgangsbohrungen auf, die sich überdecken. Durch diese sich überdeckenden Durchgangsbohrungen sind die Endabschnitte 186 und 188 über Nieten 194 bzw. 196 miteinander verbunden.

Die beabstandeten Endabschnitte 190 und 192 des Federelements 180 weisen entsprechend den Verbindungsabschnitten 98 und 100 des Federelements 82 aus Figur 7 zwei Beilagplättchen 198, 200 auf, zwischen denen und dem Endabschnitt ein Verbindungselement 202 lagefixiert ist.

Ein jeweiliger Endabschnitt 190 und 192 hat zwei Durchgangsbohrungen 204, über die das Federelement 180 mit den Lamellen vernietet oder verschraubt wird.

Figur 17 zeigt das Federelement 180 in einer Seitenansicht. Hierbei ist erkennbar, das Endabschnitte 206 und 208 des Verbindungselements 202 etwa eine gleiche Breite wie die Endabschnitte 190, 192 des Federelements 180 aus Figur 16 aufweisen. Die Endabschnitte 206 und 208 sind dabei bündig zwischen die Endabschnitte 190, 192 und den Beilagplättchen 198, 200 eingesetzt und darin lagefixiert. Die Lagefixierung erfolgt dabei insbesondere durch die Vernietung bzw. Verschraubung der Endabschnitte 190, 192 des Federelements 180 mit den Lamellen.

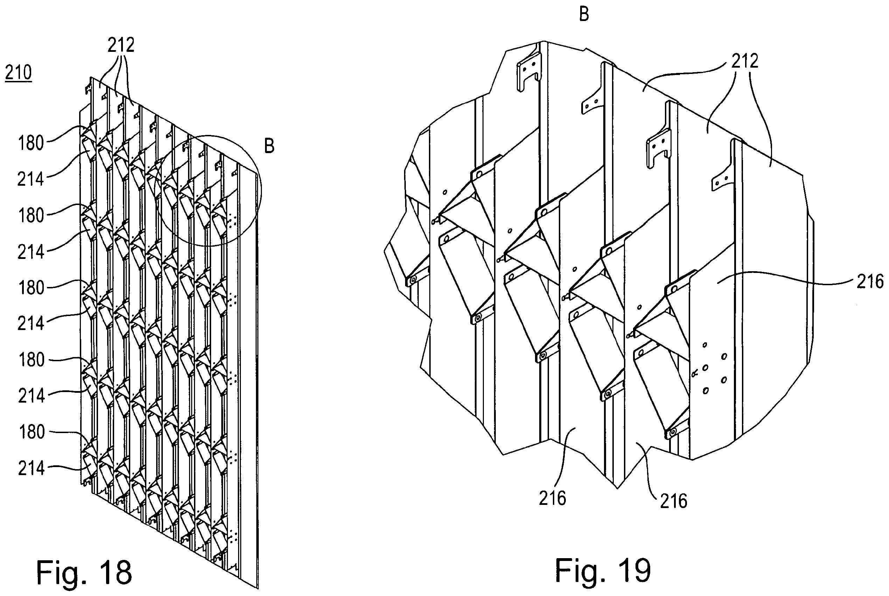

Figur 18 zeigt eine Lamellenabdeckung 210 in der die Federelemente 180 in fünf Reihen zwischen Lamellen 212 fest angeordnet sind. In der Figur 18 unterhalb einer jeweiligen Reihe mit Federelementen 118 ist eine zweite Reihe mit Federelementen 214 angeordnet, die im Unterschied zu den Federelementen 180 kein Verbindungselement 202, siehe Figur 17, aufweisen. Die Federelemente 180 weisen dabei mit ihrem Scheiteln in der Figur 18 nach oben, während die Federelemente 214 mit ihren Scheiteln nach unten weisen.

Figur 19 stellt einen vergrößerten Ausschnitt B aus Figur 18 dar. Die Lamellen 212, insbesondere Stahl- oder Federstahllamellen, sind hierbei zusammen mit ihrem Rahmenelement 216 einstückig mit einem Winkelprofil ausgebildet, in dem dieses als Führungselement etwa rechtwinklig zur Lamelle 212 angewinkelt ist, womit die Lamelle 212 im Querschnitt etwa L-förmig ausgestaltet ist. Die Rahmenelemente 216 dienen somit als Führungsabschnitte der Lamellen 212.

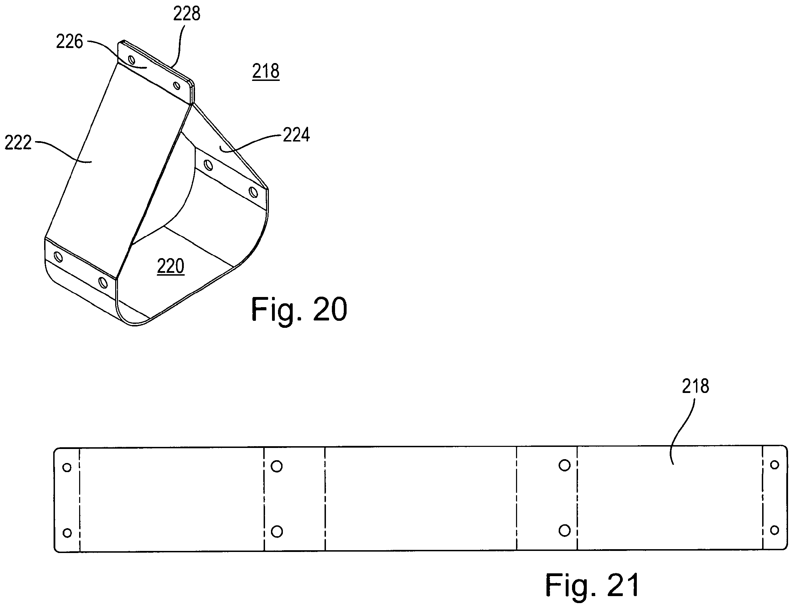

In der Figur 20 ist in einer perspektivischen Darstellung ein Federelement 218 gemäß einer weiteren Ausführungsform offenbart. Dies ist dabei im Wesentlichen entsprechend dem Federelement 82 aus Figur 7 ausgestaltet, weist aber im Unterschied dazu keine Beilagplättchen 102 und 104 auf. Das Verbindungselement 220 ist einstückig mit den Federschenkeln 222, 224 ausgebildet. Mit ihren zusammenlaufenden Endabschnitten 226 und 228 wird das Federelement 218 geschlossen.

Figur 21 zeigt das Federelement 218 aus Figur 20 abgewickelt.

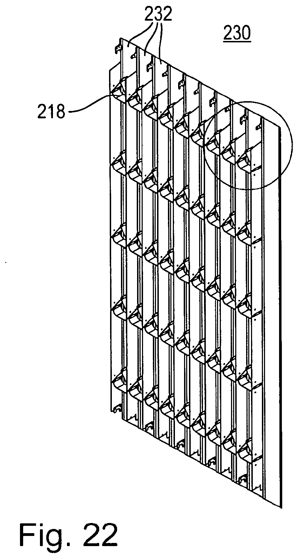

Figur 22 zeigt in einer perspektivischen Darstellung eine Lamellenabdeckung 230, das die Federelemente 218 aus der Figur 20 aufweist. Diese sind dabei in fünf etwa quer zur Längsrichtung von Lamellen 232 sich erstreckenden Reihen angeordnet und weisen mit ihren verbundenen Endabschnitten 226, 228, siehe Figur 20, in der Figur 22 nach oben.

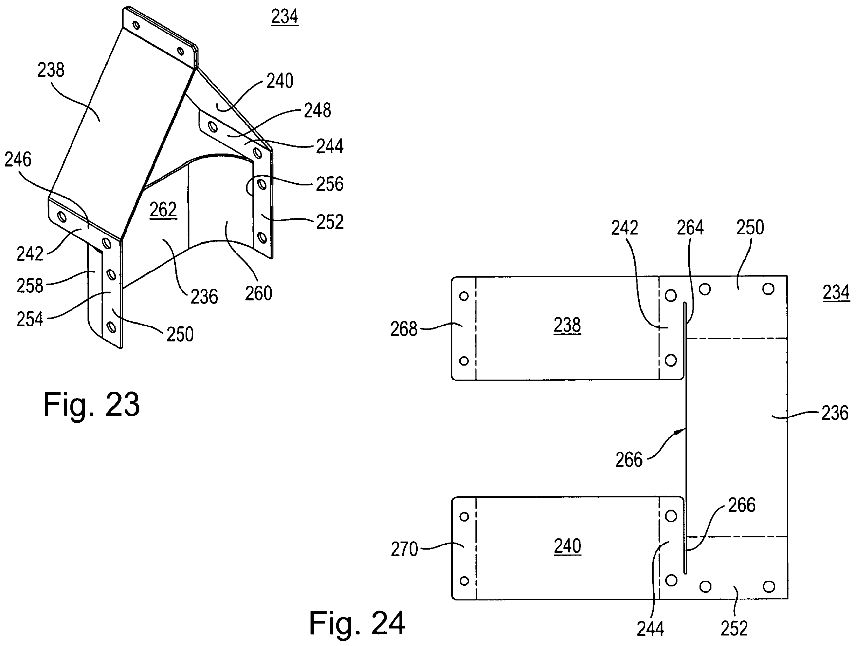

Figur 23 stellt eine nicht zur Erfindung gehörende Ausführungsform eines Federelements 234 in einer perspektivischen Darstellung dar. Im Unterschied zum Federelement 218 aus Figur 20 ist ein Verbindungsabschnitt 236 zu Federschenkeln 238, 240 im Wesentlichen rechtwinklig angewinkelt. Das Verbindungselement 236 erstreckt sich somit etwa quer zu einer Längsrichtung der Federschenkel 238 und 240. Einen Verbindungsabschnitt 242 und 244 ist hierbei im Unterschied zur Figur 20 nicht rechteckförmig, sondern gewinkelt ausgebildet und beschreibt eine L-Form. Ein Schenkel 246 und 248 des Verbindungsabschnitts 242 bzw. 244 bildet jeweils einen Endabschnitt der Federschenkel 238 bzw. 240. In einem Eckbereich des jeweiligen Schenkels 246, 248 erstreckt sich dann etwa rechtwinklig dazu ein zweiter Schenkel 250 bzw. 252. Die Verbindungsabschnitte 242 und 244 erstrecken sich dabei etwa im Parallelabstand zueinander. An einer inneren Schenkelseite 254 und 256 eines jeweiligen Schenkels 250 bzw. 252 aus erstreckt sich das Verbindungselement 236, das im Wesentlichen dem Verbindungselement 84 aus Figur 7 entspricht. Dieses hat somit zwei gebogene Abschnitte 258 und 260, die sich im Wesentlichen tangential von den Verbindungsabschnitten 242 bzw. 244 aus erstrecken, anschließend etwa entlang eines Viertelkreises verlaufen und in einen etwa ebenen gemeinsamen mittleren Abschnitt 262 übergehen. Eine Breite des Verbindungselements 236 entspricht etwa einer Breite eines jeweiligen Federschenkels 238, 240. Eine Tiefe eines konvexen Innenbereichs des Verbindungsabschnitts 236 ist dabei in dem in Figur 23 gezeigten Zustand geringer als die Breite der Federelemente 238 und 240.

Zum Befestigen des Federelements 234 an Lamellen sind in den Verbindungsabschnitten 242 und 244 in einen jeweiligen Schenkel 246, 250; 248, 252 Durchgangsbohrungen eingebracht.

Es wäre auch denkbar das Verbindungselement 236 dachförmig auszugestalten, allerdings ist durch die Bogenform eine gleichmäßigere Spannungsverteilung bei einer Zug- oder Druckbelastung gegeben.

Figur 24 zeigt das Federelement 234 aus Figur 23 abgewickelt. Hierbei ist die Einstückigkeit des Federelements 234 erkennbar. Dieses ist dabei im Wesentlichen U-förmig ausgebildet, wobei sich die Federschenkel 238 und 240 vom Verbindungselement 236 etwa senkrecht in der gezeigten Zeichenebene weg erstrecken. Die Federschenkel 238 und 240 sind jeweils durch einen Schlitz 264 bzw. 266 von dem Verbindungselement 236 abschnittsweise getrennt. Die Schlitze 264 und 266 erstrecken sich dabei etwa parallel zur Längsseite des Verbindungselements 236 zwischen diesem und den als Schenkeln 246 und 248 ausgebildeten Endabschnitten der Federschenkel 238 bzw. 240. Die Schlitze 264 und 266 sind dabei von innen her in das Federelement 234 eingebracht und enden im Eckbereich der Schenkel 244 und 246, um die Verbindung zu den beiden weiteren Schenkeln 250 und 252 der Verbindungsabschnitte 242 bzw. 244 zu ermöglichen.

Zur Herstellung des Federelements 234 werden die Federschenkel 238 und 240 im Parallelabstand zueinander angeordnet und dann verschwenkt, dass ihre zusammenlaufenden Endabschnitte 268 bzw. 270 aneinander anliegen. Hierfür werden sowohl die Endabschnitte 268 und 270 als auch die Schenkel 242 bzw. 244 zu den Federschenkeln 238 bzw. 240 angewinkelt.

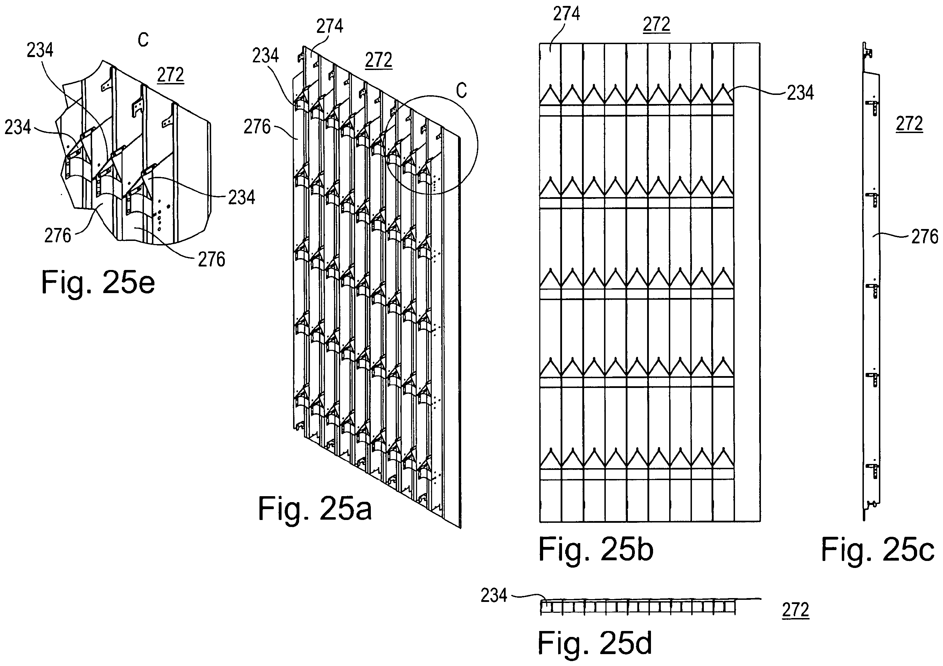

Die Figuren 25a bis 25e zeigen eine Lamellenabdeckung 272 mit dem Federelement 234 aus Figur 23 in unterschiedlichen Darstellungen. In der perspektivischen Darstellung der Lamellenabdeckung 272 in der Figur 25a zeigt die Anordnung der Federelemente 234 in fünf im Wesentlichen gleichmäßig zueinander beabstandeten Reihen. Die Federschenkel 238 und 240 des Federelements 234 aus Figur 23 weisen hierbei etwa in Längsrichtung von Lamellen 274 in der Figur 25a nach oben, während die Verbindungsabschnitte 262 aus Figur 23 mit ihrer konvexen Seite hin zu den Lamellen 274 gerichtet sind. Durch die gewinkelte Anordnung der Verbindungselemente 262 zu den Federschenkeln 238 und 240, siehe Figur 23, weisen die Federelemente 234, neben ihrer Feder- und Dämpfungsfunktion (Zug-Druck-Funktion) und ihrer Auszugsbegrenzung, zusätzlich eine vorteilhafte Längsstabilisierung aufgrund des erhöhten Biegewiderstandsmoments in Längsrichtung der Lamellen 274 durch die gewinkelte Anordnung der Verbindungselemente 236. Die zusätzliche Längsstabilisierung ist insbesondere bei vergleichsweise langen Lamellen 274 äußerst vorteilhaft. Die Federelemente 234 werden über ihre Verbindungsabschnitte 242 und 244, siehe Figur 23, über eine Nietverbindung mit Rahmenabschnitten 276 der L-förmig ausgestalteten Lamellen 274 verbunden. Dies wird in der Figur 25e verdeutlicht, die einen vergrößerten Ausschnitt C aus Figur 25a darstellt. Benachbarte Federelemente 234 werden hierbei gemeinsam mit dem dazwischen sich erstreckenden Rahmenabschnitt 276 verbunden, insbesondere vernietet. Hierfür werden die zu vernietenden Federelemente 234 auf gleicher Höhe angeordnet, so dass ihre Durchgangsbohrungen der Verbindungsabschnitte 242 und 244, siehe Figur 23, etwa koaxial verlaufen, und anschließend wird jeweils eine Niete in die jeweils an einem gemeinsamen Rahmenabschnitt 176 anliegenden Verbindungsabschnitte 242 und 244 in deren Durchgangsbohrungen eingebracht, womit die Federelemente 234 dann im Wesentlichen formschlüssig mit dem Rahmenabschnitt 276 und somit mit der Lamelle 274 verbunden sind. Die Lamellen 274 sind jeweils über ihre benachbarten Federelemente 234 federelastisch gekoppelt. Die Federelemente 234 sind in der Figur 25a gezeigten Darstellung in der ihrer Neutralstellung und somit zug- und druckentlastet. Während einer Verschiebebewegung der Lamellen 274 geraten die Federelemente 234 abwechselnd unter Druck- und Zugspannungen. Über die gesamte Verschiebebewegung sorgen die Federelemente 234 für eine gleichmäßige, wirkungsvolle im Wesentlichen synchrone Verschiebebewegung der einzelnen Lamellen 274 zueinander. Eine Federsteifigkeit des Federelements 234 ist der Masse und den Beschleunigungskräften der Lamellen 274 angepasst, um eine optimale Bewegungsverteilung auf die Lamellen 274 zu erreichen und zu vermeiden, dass sich bei schnellen Bewegungen nur die antriebsseitigen Lamellen 274 bewegen.

Figur 25b zeigt eine Hinteransicht der Lamellenabdeckung 272. Diese weist insgesamt zehn Lamellen 274 auf, wobei diese über neun Federelemente 234 in unterschiedlichen Höhen miteinander verbunden sind. In der Figur 25c ist eine Seitenansicht der Lamellenabdeckung 272 dargestellt. Hierbei ist erkennbar, dass die Federelemente 234, siehe Figur 25a, eine geringere Breite als der Rahmenabschnitt 276 einer jeweiligen Lamelle aufweisen, und somit in der Figur 25c nicht ersichtlich sind. Die geringere Breite der Federelemente 234 ist auch in der Figur 25d ersichtlich, die eine Draufsicht der Lamellenabdeckung 272 darstellt.

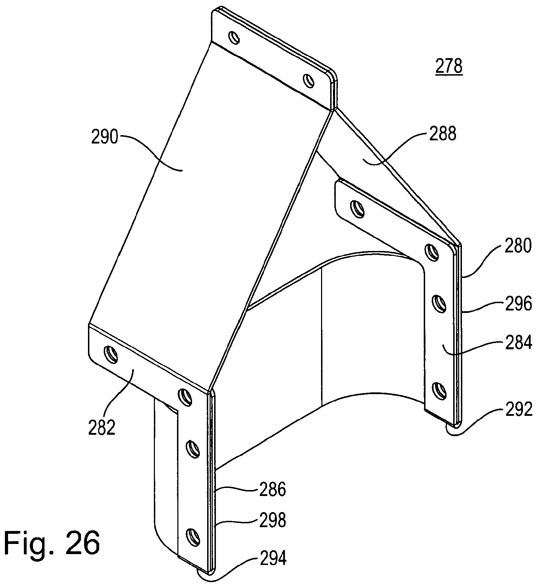

Figur 26 zeigt ein Federelement 278 gemäß einer weiteren nicht zur Erfindung gehörenden Ausführungsform. Diese hat im Unterschied zum Federelement 234 aus Figur 23 im Bereich ihrer L-förmigen Verbindungsabschnitte 280, 282 jeweils ein Beilagplättchen 284 bzw. 286. Diese sind ebenfalls L-förmig etwa mit der gleichen Fläche wie die Verbindungsabschnitte 280 und 282 ausgebildet. Die Beilagplättchen 284 und 286 sind dabei an einer von Federschenkeln 288, 290 weg weisenden Kurzseite 292 der zu den Federelementen angestellten Schenkeln 296 bzw. 298 einstückig mit dem Federelement 278 verbunden. Die Beilagplättchen 284 und 286 sind dabei in einem Innenbereich des Federelements 278 angeordnet und erstrecken sich jeweils parallel zum jeweiligen Verbindungsabschnitt 280 bzw. 282. Durch die Beilagplättchen 284 und 286 ist das Federelement 278 im Bereich ihrer Verbindung mit den Lamellen verstärkt und des Weiteren kann zusätzlich zwischen den Beilagplättchen 284 und 286 und dem jeweiligen Verbindungsabschnitt 280 bzw. 282 ein zusätzliches Verbindungselement festgelegt werden, wie es beispielsweise bei dem Federelement 118 aus Figur 17 dargestellt ist.

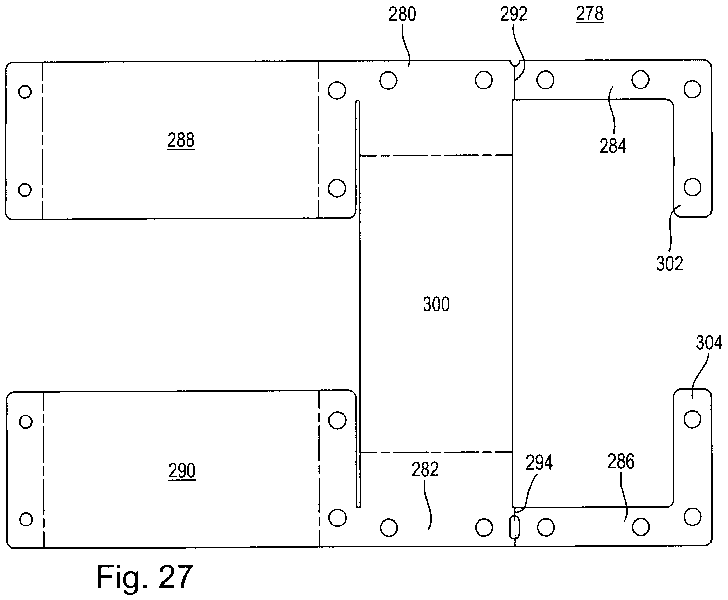

Figur 27 zeigt das Federelement 278 aus Figur 26 abgewickelt. Dieses weist zusätzlich zu dem U-förmig ausgebildeten Federschenkel 288, 290 und dem Verbindungselement 300 die L-förmigen Beilagplättchen 284, 286 auf. Diese erstrecken sich in der Figur 27 von der jeweiligen Kurzseite 292 bzw. 294 etwa senkrecht weg und weisen mit ihren abgewinkelten Endabschnitten 302 und 304 aufeinander zu. Bei der Montage des Federelements 278 werden die Beilagplättchen 284 und 286 um ihre jeweilige Kurzseite 292 bzw. 294 verschwenkt, bis sie sich etwa parallel zu den Verbindungsabschnitten 280 bzw. 282 erstrecken. Damit die Spannungen im Bereich der Kurzseiten 292 und 294 zur plastischen Verformung erhöht sind, ist in die Kurzseite 294 ein Langloch und in die Kurzseite 292 eine Nut eingebracht.

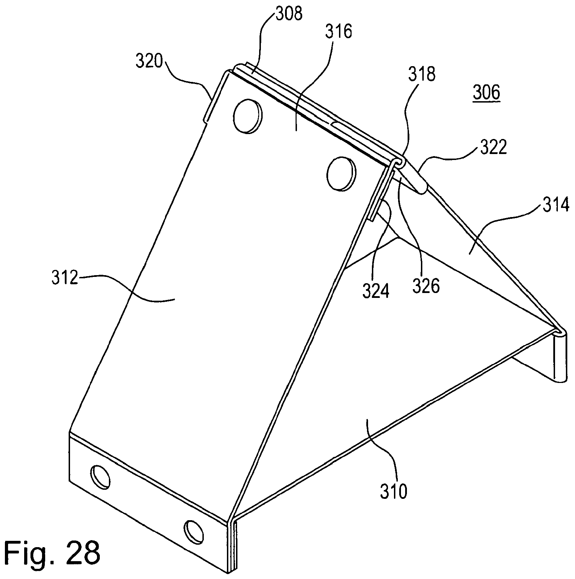

In der Darstellung gemäß Figur 28 ist ein Federelement 306 gemäß einer weiteren Ausführungsform gezeigt. Dieses weist entsprechend der Figur 3 eine Gelenklasche 308 und ein Verbindungselement 310 auf. Zum Festlegen der Gelenklasche 308 haben Federschenkel 312 und 314 des Federelements 306 an ihren zusammenlaufenden Endabschnitten 316 bzw. 318 ein einstückig über eine Kurzseite 320, 322 mit diesem verbundenes Beilagplättchen 324 bzw. 326, die parallel zum jeweiligen Endabschnitt 316 bzw. 318 im Innenbereich der Federschenkel 312 und 314 angeordnet sind. Zwischen einem jeweiligen Beilagplättchen 324 und 326 und dem jeweiligen Endabschnitt 316 bzw. 318 ist die Gelenklasche 308 festgelegt, in dem diese jeweils mit einem Beilagplättchen 324 bzw. 326 und dem Endabschnitt 316 bzw. 318 vernietet ist. Das Verbindungselement 310 ist entsprechend der Ausführungsform des Federelements 180 in Figur 16 mit den Federschenkeln 312 und 314 verbunden.

Die Ausführung des Federelements 306 mit der Gelenklasche 308 hat den Vorteil, dass für diese beispielsweise ein anderes Material als die der Federschenkel 312 und 314 gewählt werden kann, womit die mechanischen Eigenschaften an vorherrschende Zug- und Druckkräfte in einer Lamellenabdeckung angepasst werden kann.

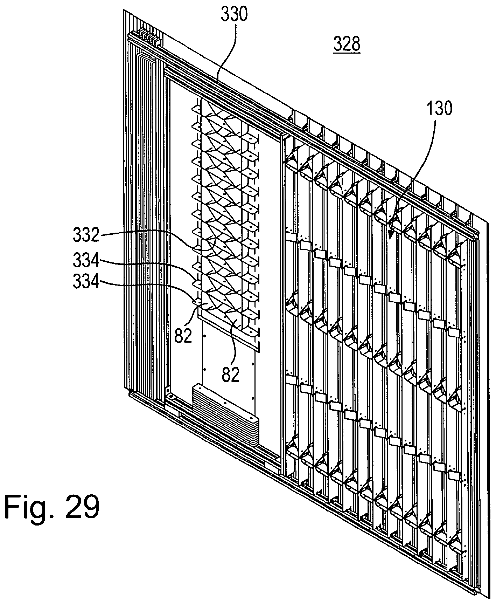

Figur 29 stellt eine Ausführungsform einer ersten und zweiten Lamellenabdeckung 328 und 329 dar, die in einer Horizontalrichtung innerhalb eines gemeinsamen Führungsrahmens 330 streck- oder stauchbar sind. Zwischen den beiden Lamellenabdeckungen 328 und 329 ist ein in Horizontalrichtung zusammen mit den Lamellenabdeckungen 328 und 329 verschiebbarer Führungsrahmen 331 angeordnet. In diesem wiederum sind zwei in Vertikalrichtung verschiebbare Lamellenabdeckungen 332 und 333 gelagert, zwischen denen eine Werkzeugöffnung 335 ausbildbar ist. Die in der Figur 29 rechte Lamellenabdeckung 328 und die mittlere, obere Lamellenabdeckung 332 sind etwa in ihrer maximalen Strecklage gezeigt. Die linke Lamellenabdeckung 329 und die mittlere, untere Lamellenabdeckung 333 sind hierbei in ihrer minimalen Strecklage. Wird die Werkzeugöffnung 335 mittig angeordnet, so befinden sich alle Lamellenabdeckungen 328, 329, 332 und 333 etwa in ihrer Neutralstellung.

Zusätzlich zu der Lamellenabdeckung 130 aus Figur 9 ist ein Führungsrahmen 330 dargestellt. In diesem ist in Ergänzung zur Lamellenabdeckung 130, deren Lamellen in einer Horizontalrichtung verschiebbar sind, eine Lamellenabdeckung 332 dargestellt, deren Lamellen 334 in einer Vertikalrichtung verschiebbar in den Führungsrahmen 330 gelagert sind. Zwischen den Lamellen 334 sind hierbei jeweils zwei Federelemente 82, siehe Figur 7, angeordnet. Die Längsrichtung der Federelemente 82 erstreckt sich somit etwa in Horizontalrichtung, wobei die Federelemente 82 mit ihren Federschenkeln aufeinander zu weisen.

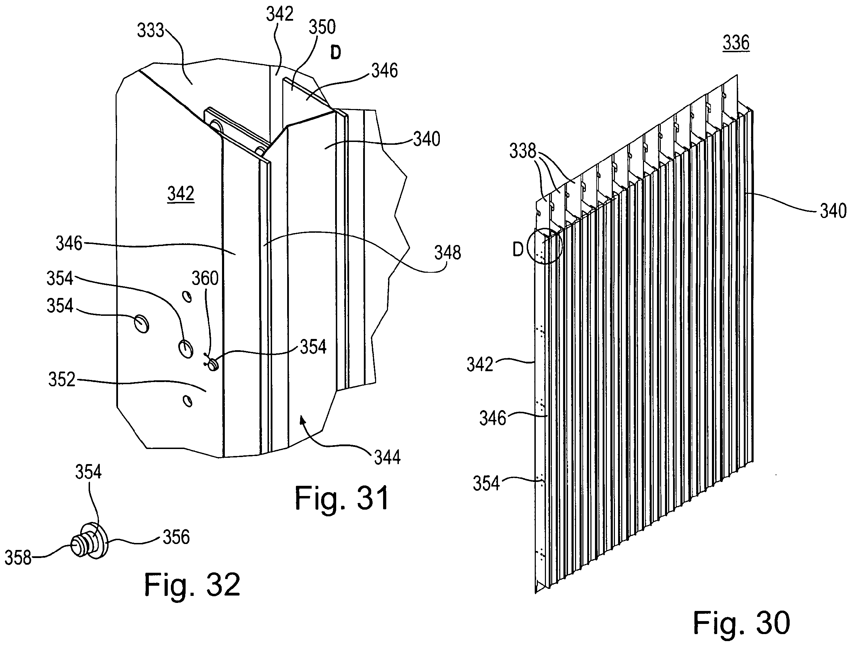

Figur 30 zeigt eine weitere Ausführungsform einer Lamellenabdeckung 336 in einer perspektivischen Darstellung. Diese hat eine Vielzahl von Lamellen 338, die über Federelemente, beispielsweise entsprechend der Ausführungsform aus Figur 22, angeordnet sind. Die Lamellenabdeckung 336 hat im Unterschied zu den vorherigen Ausführungsformen zusätzlich einen Dichtvorhang 340, der diese großflächig abdichtet und somit einen sicheren Schutz für besonders empfindliche Maschinenelemente, wie beispielsweise einen Linearmotor oder einer Kugelrollspindel bietet. Der Dichtvorhang 340 ist dabei mit den abgewinkelten Rahmenabschnitten 342 der Lamellen 338 verbunden. Die Verbindung des Dichtvorhangs 340 mit den Rahmenabschnitten 342 zeigt Figur 31 in einer vergrößerten Darstellung eines Ausschnitts D aus Figur 30, wobei es sich um einen linken, oberen Eckbereich der Lamellenabdeckung 336 handelt. Hierbei ist die Ausgestaltung des Dichtvorhangs 340 und seine Verbindung mit den Rahmenabschnitten 342 der Lamellen 338 dargestellt.

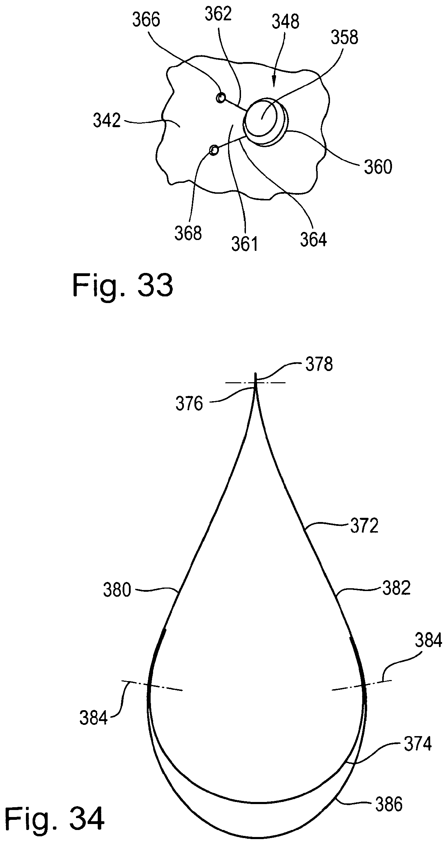

Der Dichtvorhang 340 hat jeweils zwischen zwei Rahmenabschnitten 342 zwei Längsfaltungen 344, die wiederum jeweils zwischen zwei Rahmenteilen bzw. Halteelementen 346 des Dichtvorhangs 340 ausgebildet sind. Ein Halteelement 346 ist dabei im Wesentlichen rechteckförmig ausgebildet und erstreckt sich etwa über die gesamte Länge des Rahmenabschnitts 342, siehe Figur 30, und hat die gleiche Länge, wie der Dichtvorhang 340 mit seinen Längsfaltungen 344. Ein jeweiliges Halteelement 346 ist hierbei jeweils in einer zu den Lamellen 338 weisenden Aufnahmefalte 347 des Dichtvorhangs 340 angeordnet, wobei eine Breite eines jeweiligen Halteelements 346 größer als eine Tiefe einer Aufnahmefalte 347 ist. Ein jeweiliges Halteelement 346 füllt eine jeweilige Aufnahmefalte 347 im Wesentlichen vollständig aus. Jede zweite Aufnahmefalte 347 ist zusammen mit ihrem Halteelement 346 an einem jeweiligen Rahmenabschnitt 342 über eine Bolzenverbindung 348 festgelegt. Diese weist Haltestifte 354 auf, über die die Halteelemente 346 lösbar mit den Rahmenabschnitten 342 verbunden sind. Ein derartiger Haltestift 354 ist in der Figur 32 vergrößert dargestellt. Die Haltestifte 354 sind etwa T-förmig ausgebildet und weisen einen Haltekopf 356 auf, von dem aus sich ein Stiftabschnitt 358 erstreckt. In den Stiftabschnitt 358 ist eine Ringnut 359 eingebracht. Mit ihrem Stiftabschnitt 358 durchsetzen die Haltestifte 354 jeweils eine Durchgangsbohrung des Halteelements 346, der Aufnahmefalte 347 und des Rahmenabschnitts 342. In die Durchgangsbohrung 360 des Rahmenabschnitts 342 kragt ein Federabschnitt des Rahmenabschnitts 342 ein und taucht zum Verriegeln des Haltestifts 354 in dessen Ringnut 359 ein. Dies ist in Figur 33 verdeutlicht, in der ein vergrößerter Ausschnitt der Bolzenverbindung 348 aus Figur 31 gezeigt ist. Der Federabschnitt hat hierbei das Bezugszeichen 361. Dieser ist durch zwei v-förmig zueinander angestellte, sich von der Durchgangsbohrung 360 radial wegerstreckende in den Rahmenabschnitt 342 eingebrachte Schlitze 362 und 364 gebildet. Diese weisen hierbei die gleiche Länge auf. Die Schlitze 362 und 364 münden jeweils mit ihrem von der Durchgangsbohrung 360 wegweisenden Endabschnitt in einer etwa kreiszylindrischen Aussparung 366 bzw. 368.

Bei der Montage des Haltestifts 354 wird dieser durch die Durchgangsbohrung 360 hindurchgeführt, wodurch der in die Durchgangsbohrung 360 einkragende Federabschnitt 361 von dieser über den Stiftabschnitt 358 von der Durchgangsbohrung weggebogen wird. Der Federabschnitt 361 gleitet dann bei der Hindurchführung des Haltestifts 354 entlang des Stiftabschnitts 358 bis zu dessen Ringnut 359, in die er einschnappt. Der Haltestift 354 ist somit formschlüssig in dem Rahmenabschnitt 342 zusammen mit dem Dichtvorhang 340 gehaltert. Für ein jeweiliges Halteelement 346 werden in Längsrichtung versetzt fünf derartiger Haltestifte 354 in einen jeweiligen Rahmenabschnitt 342 eingesetzt, siehe Figur 30.

In der Figur 31 sind ferner Nieten 354 zum Befestigen von Federelementen in einem mittleren Bereich der Rahmenabschnitte 342 erkennbar.

Der Dichtvorhang 340 aus Figur 30 ist auf einfache Weise nachträglich einbaubar.

Figur 34 zeigt in einer Längsschnittansicht eine weitere Ausführungsform eines einstückigen Federelements 372 mit einer Zugbegrenzung 374. Das Federelement 372 ist ohne die Zugbegrenzung 374 im abgewickelten Zustand im Wesentlich entsprechend der Figur 6 ausgestaltet. Im Unterschied zur Ausführungsform aus Figur 5 und 6 wird das Federelement 372 nicht abgewinkelt, sondern es werden einfach ihre Endabschnitte 376 und 378 aufeinandergelegt und miteinander, insbesondere formschlüssig über Schrauben oder Nieten, verbunden, wodurch das Federelement 372 im Wesentlichen tropfenförmig ausgestaltet ist. Etwa im Bereich eines größten Abstands der Schenkel 380 und 382 des Federelements 372 ist dieses über eine formschlüssige Verbindung 384 (in der Figur 34 durch eine Strichpunktlinie gekennzeichnet) mit Lamellen verbunden. Über die Verbindung 384 ist auch die Zugbegrenzung 374 am Federelement 372 festgelegt und erstreckt sich beabstandet zum bogenförmigen Verbindungselement 386 bzw. Verbindungsabschnitt ebenfalls etwa bogenförmig zu diesem. Das Federelement 372 könnte auch ohne die Zugbegrenzung 374 eingesetzt werden.

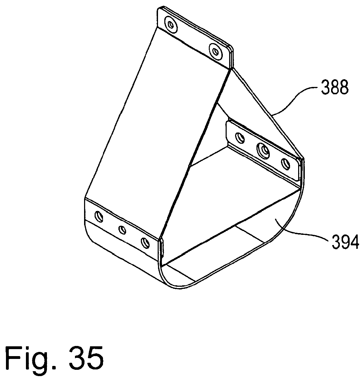

In Figur 35 ist eine weitere Ausführungsform eines Federelements 388 gezeigt, dass im Wesentlichen dem Federelement 82 aus Figur 11 entspricht. Im Unterschied zur Figur 34 sind Schenkel 390 und 392 zum Verbindungselement 394 bzw. Verbindungsabschnitt und zu ihren Endabschnitten 396 und 398 gewinkelt. Eine Zugbegrenzung 400 ist zwischen Verbindungsabschnitten 402 und 404 des Federelements 388 und Beilagplättchen 406 bzw. 408 festgelegt und als Auszugsband ausgebildet. Die Zugbegrenzung 400 hat eine gleich Breite, wie die Schenkel 390, 392 und das Verbindungselement 394. Eine Länge der Zugbegrenzung 400 ist kürzer als das Verbindungselement 394, womit in einer maximalen Strecklage der Zugbegrenzung 400, siehe Figur 35, das Verbindungselement 394 weiterhin gebogen ist.

Es ist denkbar, eine Zugbegrenzung, wie sie beispielsweise in der Figur 34 und 35 gezeigt ist, für alle vorstehend erläuterten Ausführungsformen der Federelemente vorzusehen.

Ein Verhältnis H/B, siehe beispielsweise Figur 8, der vorstehend gezeigten Federelemente ist vorzugsweise kleiner oder gleich 1, womit die Federelemente schmal bauen.

Offenbart ist eine Lamellenabdeckung für Werkzeugmaschinen. Diese hat eine Vielzahl von sich überdeckenden Lamellen, die über Rahmenelemente auf einer Führungsschiene geführt sind. Einer jeweiligen Lamelle ist hierbei auf deren Rückseite eines der Rahmenelemente zugeordnet. Zwischen benachbarten Rahmenelementen ist ein Federelement angeordnet, das bei einer Relativbewegung der Lamellen bzw. der Rahmenelemente zueinander, von einer Neutralposition aus, gespannt wird, wodurch sich eine Federkraft aufbaut, die entgegen der Relativbewegung wirkt. Das Federelement hat zwei v-förmig angeordnete Federschenkel, wobei zueinander beabstandete Endabschnitte der Federschenkel jeweils mit einem Rahmenelement verbunden sind und wobei zwischen den Federschenkeln ein Verbindungselement derart angeordnet ist, das eine Relativbewegung der Federschenkel zueinander durch das Verbindungselement in einer Richtung begrenzt ist.

### Bezugszeichenliste:

- 1: Lamellenabdeckung
- 2: Führungsschiene
- 4: Führungsschiene
- 6: Führungsrahmen
- 8: Lamelle
- 10: Seitenabschnitt
- 12: Seitenabschnitt
- 14: Rückseite
- 16: Rahmenelement
- 18: Aussparung
- 19: Blech
- 20: Federelement
- 21: Hakenvorsprung
- 22: Verbindungselement
- 24: Federschenkel
- 26: Federschenkel
- 28: Endabschnitt
- 30: Endabschnitt
- 32: Gelenklasche
- 34: Halteabschnitt
- 36: Halteabschnitt
- 38: Halteplatte
- 40: Halteplatte
- 42: Nietverbindung
- 44: Endabschnitt
- 46: Endabschnitt
- 48: Faltabschnitt
- 49: Faltabschnitt
- 50: Nietverbindung
- 52: Scheitel / Federelement
- 54: Element
- 56: Faltung
- 58: Faltung
- 60: Federschenkel
- 62: Federschenkel
- 64: Endabschnitt
- 66: Endabschnitt
- 68: Bohrung
- 70: Bohrung
- 72: Bohrung
- 74: Bohrung
- 76: Endabschnitt
- 78: Endabschnitt
- 80: Falte
- 82: Federelement
- 84: Verbindungselement
- 86: Federschenkel
- 88: Federschenkel
- 90: Außenseite
- 92: mittlerer Abschnitt
- 94: gebogener Abschnitt
- 96: gebogener Abschnitt
- 98: Verbindungsabschnitt
- 100: Verbindungsabschnitt
- 102: Beilagplättchen
- 104: Beilagplättchen
- 106: Kurzseite
- 108: Kurzseite
- 110: Durchgangsbohrung
- 112: Durchgangsbohrung
- 114: Endabschnitt
- 116: Endabschnitt
- 118: Durchgangsbohrung
- 120: Durchgangsbohrung
- 122: Langloch
- 124: Langloch
- 126: Unterseite
- 128: Langseite
- 130: Lamellenabdeckung
- 132: Lamelle
- 134: Reihe mit Federelementen
- 136: Reihe mit Federelementen
- 138: Reihe mit Federelementen
- 140: weiteres Verbindungselement / Zugbegrenzung
- 142: Reihe mit Federelementen
- 144: Reihe mit Federelementen
- 146: Stabilisierungselement
- 150: Federschenkel
- 152: Federschenkel
- 154: Endabschnitt
- 156: Endabschnitt
- 158: Außenseite
- 160: Außenseite
- 162: Beilagplättchen
- 164: Beilagplättchen
- 166: Scheitel
- 168: Scheitel
- 170: Scheitel
- 172: Kurzseite
- 174: Kurzseite
- 176: Langloch
- 178: Langloch
- 180: Federelement
- 182: Federschenkel
- 184: Federschenkel
- 186: Endabschnitt
- 188: Endabschnitt
- 190: Endabschnitt
- 192: Endabschnitt
- 194: Niete
- 196: Niete
- 198: Beilagplättchen
- 200: Beilagplättchen
- 202: Verbindungselement
- 204: Durchgangsbohrung
- 206: Endabschnitte
- 208: Endabschnitte
- 210: Lamellenabdeckung
- 212: Lamellen
- 214: Federelement
- 216: Rahmenelement
- 218: Federelement
- 220: Verbindungselement
- 222: Federschenkel
- 224: Federschenkel
- 226: Endabschnitt
- 228: Endabschnitt
- 230: Lamellenabdeckung
- 232: Lamellen
- 234: Federelement
- 236: Verbindungselement
- 238: Federschenkel
- 240: Federschenkel
- 242: Verbindungsabschnitt
- 244: Verbindungsabschnitt
- 246: Schenkel
- 248: Schenkel
- 250: Schenkel
- 252: Schenkel
- 254: Langseite
- 256: Langseite
- 258: gebogener Abschnitt
- 260: gebogener Abschnitt
- 262: mittlerer Abschnitt
- 264: Schlitz
- 266: Schlitz
- 268: Endabschnitt
- 270: Endabschnitt
- 272: Lamellenabdeckung
- 274: Lamelle
- 276: Rahmenabschnitt
- 278: Federelement
- 280: Verbindungsabschnitt
- 282: Verbindungsabschnitt
- 284: Beilagplättchen
- 286: Beilagplättchen
- 288: Federschenkel
- 290: Federschenkel
- 292: Kurzseite
- 294: Kurzseite
- 296: Schenkel
- 298: Schenkel
- 300: Verbindungselement
- 302: Endabschnitt
- 304: Endabschnitt
- 306: Federelement
- 308: Gelenklasche
- 310: Verbindungselement
- 312: Federschenkel
- 314: Federschenkel
- 316: Endabschnitt
- 318: Endabschnitt
- 320: Kurzseite
- 322: Kurzseite
- 324: Beilagplättchen
- 326: Beilagplättchen
- 328: Lamellenabdeckung
- 329: Lamellenabdeckung
- 330: Führungsrahmen
- 331: Führungsrahmen
- 332: Lamellenabdeckung
- 333: Lamellenabdeckung
- 334: Lamellen
- 335: Werkzeugöffnung
- 336: Lamellenabdeckung
- 338: Lamellen
- 340: Dichtvorhang
- 342: Rahmenabschnitt
- 344: Längsfaltung
- 346: Halteelement
- 347: Aufnahmefalte
- 348: Bolzenverbindung
- 354: Haltestift
- 356: Haltekopf
- 358: Stiftabschnitt
- 359: Ringnut
- 360: Durchgangsbohrung
- 361: Federabschnitt
- 362: Schlitz
- 364: Schlitz
- 366: Aussparung
- 368: Aussparung
- 370: Niet
- 372: Federelement
- 374: Zugbegrenzung
- 376: Endabschnitt
- 378: Endabschnitt
- 380: Schenkel
- 382: Schenkel
- 384: Verbindung
- 386: Verbindungselement
- 388: Federelement
- 390: Schenkel
- 392: Schenkel
- 394: Verbindungselement
- 396: Endabschnitt
- 398: Endabschnitt
- 400: Zugbegrenzung
- 402: Verbindungsabschnitt
- 404: Verbindungsabschnitt
- 406: Beilagplättchen
- 408: Beilagplättchen

## Patentansprüche

1. Federelement für eine Lamellenabdeckung (1) mit zwei etwa v-förmig zueinander angestellten Federschenkeln (24, 26; 60, 62), wobei sich zwischen den Federschenkeln (24, 26; 60, 62), insbesondere zwischen den zueinander beabstandeten Endabschnitten (44, 46; 76, 78) der Federschenkel (24, 26; 60, 62), ein Verbindungselement (22) erstreckt, das die maximale Strecklage des Federelements (20) bestimmt, **dadurch gekennzeichnet, dass** das Federelement (20) und das Verbindungselement (22) durch Falten und einstückig ausgebildet sind und in ihrer Abwicklung im Wesentlichen rechteckförmig sind.

2. Federelement nach Anspruch 1, wobei das Verbindungselement (22) federnd ausgebildet ist.

3. Federelement nach Anspruch 1 oder 2, wobei zusätzlich zum Verbindungselement (22) zwischen den Federschenkeln (24, 26; 60, 62) eine Zugbegrenzung (140; 374; 400) vorgesehen ist.

4. Federelement nach einem der Ansprüche 1 bis 3, wobei das Verbindungselement (22) oder die Zugbegrenzung (140; 374; 400) bogenförmig oder dachförmig ausgebildet ist.

5. Federelement nach einem der vorhergehenden Ansprüche, wobei das Federelement (20) und das Verbindungselement (22) einstückig sind.

6. Federelement nach einem der vorhergehenden Ansprüche, wobei zusammenlaufende Endabschnitte (28, 30; 64, 66) der Federschenkel (24, 26; 60, 62) direkt oder über eine Gelenklasche (32) verbunden sind und/ oder einstückig ausgebildet sind.

7. Federelement nach einem der vorhergehenden Ansprüche, wobei zwei Federelemente (20) zu einem X-Element kombiniert sind.

8. Federelement nach einem der Ansprüche 3 bis 7, wobei die Zugbegrenzung (140; 374; 400) biegeschlaff ist.

9. Lamellenabdeckung für Werkzeugmaschinen mit einer Vielzahl von Lamellen (8), die einander überlappen und verschiebbar geführt sind, und die rückseitig ein Rahmenelement (16) aufweisen, wobei zwischen benachbarten Rahmenelementen (16) ein Federelement (20) gemäß einem der vorhergehenden Ansprüche derart angeordnet ist, dass es ausgehend von einer Nullstellung beim Verschieben der Lamellenabdeckung mit Zug oder mit Druck beaufschlagt ist.

10. Lamellenabdeckung nach Anspruch 9, wobei Befestigungsabschnitte zur Verbindung des Federelements (20) mit dem Rahmenelement (16) im Bereich der beabstandeten Endabschnitte (44, 46; 76, 78) vorgesehen sind.

11. Lamellenabdeckung nach Anspruch 8, wobei zumindest ein Befestigungsabschnitt parallel zum Rahmenelement abgewinkelt ist.

12. Lamellenabdeckung nach einem der Ansprüche 9 bis 11, wobei diese zusätzlich einen Dichtvorhang (340) aufweist.

13. Lamellenabdeckung nach Anspruch 12, wobei der Dichtvorhang (340) lösbar befestigt ist.

14. Lamellenabdeckung nach Anspruch 13, wobei der Dichtvorhang (340) durch Schnappverbindungen (354, 361) befestigt ist.

15. Lamellenabdeckung nach einem der Ansprüche 9 bis 14 mit einem Stabilisierungselement (146), das zwei Schenkel aufweist, deren Länge gleich oder kleiner als deren Breite ist.

## Claims

1. Spring element for a lamellar covering (1) having two spring legs (24, 26; 60, 62) positioned approximately in a v shape with regard to each other, wherein a connection member (22) extends between the spring legs (24, 26; 60, 62), in particular between the spaced-apart end portions (44, 46; 76, 78) of the spring legs (24, 26; 60, 62), wherein the connection member (22) determines the maximum stretched position of the spring element (20), **characterized in that** the spring element (20) and the connection member (22) are formed by folding and in one piece, and are essentially rectangular when unreeled.

2. Spring element according to claim 1, wherein the connection member (22) is elastically formed.

3. Spring element according to claim 1 or 2, wherein a pull limiter (140; 374; 400) is provided between the spring legs (24, 26; 60, 62) in addition to the connection member (22).

4. Spring element according to one of the claims 1 to 3, wherein the connection member (22) or the pull limiter (140; 374; 400) is arc shaped or roof shaped.

5. Spring element according to one of the preceding claims, wherein the spring element (20) and the connection member (22) are formed as one piece.

6. Spring element according to one of the preceding claims, wherein joining end portions (28, 30; 64, 66) of the spring legs (24, 26; 60, 62) are connected directly or via a joint plate (32) and/or are formed in one piece.

7. Spring element according to one of the preceding claims, wherein two spring elements (20) are combined to form an X element.

8. Spring element according to one of the claims 3 to 7, wherein the pull limiter (140; 374; 400) is limp.

9. Lamellar covering for machine tools having a plurality of lamellae (8) which overlap each other and which are movably guided and which have a frame member (16) on their rear side, wherein a spring element (20) according to one of the preceding claims is arranged such between neighboring frame members (16) that starting from a neutral position, pulling or pushing can be applied to it when moving the lamellar covering.

10. Lamellar covering according to claim 9, wherein fixing portions for connecting the spring element (20) with the frame member (16) are provided in the region of the spaced-apart end portions (44, 46; 76, 78).

11. Lamellar covering according to claim 8, wherein at least one fixing portion is unreeled in parallel to the frame member.

12. Lamellar covering according to one of the claims 9 to 11, wherein it additionally comprises a sealing curtain (340).

13. Lamellar covering according to claim 12, wherein the sealing curtain (340) is releasably fixed.

14. Lamellar covering according to claim 13, wherein the sealing curtain (340) is fixed via snap-fits (354, 361).

15. Lamellar covering according to one of the claims 9 to 14 having a stabilizing member (146) comprising two legs whose length is equal to or smaller than their width.

## Revendications

1. Elément ressort pour un recouvrement à lamelles (1) comprenant deux branches de ressort (24, 26 ; 60, 62) placées l'une par rapport à l'autre de manière à former approximativement un v, dans lequel un élément de liaison (22) s'étend entre les branches de ressort (24, 26 ; 60, 62), en particulier entre les sections d'extrémité (44, 46 ; 76, 78) espacées les unes des autres des branches de ressort (24, 26 ; 60, 62), lequel élément de liaison définit la position d'étirage maximale de l'élément ressort (20), **caractérisé en ce que** l'élément ressort (20) et l'élément de liaison (22) sont réalisés par pliage et d'un seul tenant et sont sensiblement de forme rectangulaire dans leur développement.

2. Elément ressort selon la revendication 1, dans lequel l'élément de liaison (22) est réalisé sur ressorts.

3. Elément ressort selon la revendication 1 ou 2, dans lequel une délimitation de traction (140 ; 374 ; 400) est prévue en plus de l'élément de liaison (22) entre les branches de ressort (24, 26 ; 60, 62).

4. Elément de ressort selon l'une quelconque des revendications 1 à 3, dans lequel l'élément de liaison (22) ou la délimitation de traction (140 ; 374 ; 400) est réalisé(e) de manière à présenter une forme d'arc ou une forme de toit.

5. Elément de ressort selon l'une quelconque des revendications précédentes, dans lequel l'élément ressort (20) et l'élément de liaison (22) sont d'un seul tenant.

6. Elément de ressort selon l'une quelconque des revendications précédentes, dans lequel des sections d'extrémité (28, 30 ; 64, 66) convergentes des branches de ressort (24, 26 ; 60, 62) sont reliées directement ou par l'intermédiaire d'une bride d'articulation (32) et/ou sont réalisées d'un seul tenant.

7. Elément de ressort selon l'une quelconque des revendications précédentes, dans lequel deux éléments de ressort (20) sont combinés en un élément en X.

8. Elément de ressort selon l'une quelconque des revendications 3 à 7, dans lequel la délimitation de traction (140 ; 374 ; 400) est souple en flexion.

9. Recouvrement à lames pour des machines-outils comprenant une pluralité de lamelles (8), qui se chevauchent les unes les autres et sont guidées de manière à pouvoir être coulissées et qui présentent côté arrière un élément de cadre (16), dans lequel un élément ressort (20) selon l'une quelconque des revendications précédentes est disposé entre des éléments de cadre (16) adjacents de telle manière qu'il est soumis à l'action d'une traction ou d'une pression en partant d'une position nulle lors du coulissement du recourbement à lamelles.

10. Recouvrement à lamelles selon la revendication 9, dans lequel des sections de fixation sont prévues afin de relier l'élément ressort (20) à l'élément de cadre (16) dans la zone des sections d'extrémité (44, 46 ; 76, 78) espacées.

11. Recouvrement à lamelles selon la revendication 8, dans lequel au moins une section de fixation est coudée de manière parallèle par rapport à l'élément de cadre.

12. Recouvrement à lamelles selon l'une quelconque des revendications 9 à 11, dans lequel ce dernier présente en supplément un rideau étanche (340).

13. Recouvrement à lamelles selon la revendication 12, dans lequel le rideau étanche (340) est fixé de manière amovible.

14. Recouvrement à lamelles selon la revendication 13, dans lequel le rideau étanche (340) est fixé par des liaisons à déclic (354, 361).

15. Recouvrement à lamelles selon l'une quelconque des revendications 9 à 14 comprenant un élément de stabilisation (146), qui présente deux branches, dont la longueur est égale ou inférieure à leur largeur.
